# EUROPEAN PATENT APPLICATION

(11) **EP 3 926 257 A1**
(43) Date of publication of application: **22.12.2021**
(21) Application number: 19914852.9
(22) Date of filing: 24.10.2019
(51) Int. Cl.: F25B 29/00, F01K 25/10, F24H 4/00

(54) **TRANSDUCING METHOD AND SYSTEM**

(30) Priority: 13.02.2019 CN 201910112603
(71) Applicant: Sun, Chenggang, Weihai, Shandong 264500 (CN)
(72) Inventor: Sun, Chenggang, Weihai, Shandong 264500 (CN)
(74) Representative: Brann AB
(86) International application number: PCT/CN2019/112923
(87) International publication number: WO 2020/164255

(57) **Abstract**

A transducing method, comprising: using a working medium of a first heat pump (I) to absorb heat from an output pressure working medium gas of a pneumatic motor (J) so as to condensing the output pressure working medium gas of the pneumatic motor (J) to obtain a pressure working medium liquid, and delivering the pressure working medium liquid as an input pressure working medium of the pneumatic motor (J); compressing, by means of the first heat pump (I), the working medium after heat absorption to raise the temperature of the working medium so as to deliver the heat to the input pressure working medium of the pneumatic motor (J), so as to enable same to be heated and vaporized into a pressure working medium gas, the pressure working medium gas being used for actuating the pneumatic motor (J) and then being outputted by the pneumatic motor (J) as the output pressure working medium gas of the pneumatic motor (J); and delivering the working medium of the first heat pump (1) of which the temperature is reduced after the heat thereof has been delivered to the input pressure working medium, so as to reabsorb heat from the output pressure working medium gas of the pneumatic motor (J), so that the working medium of the first heat pump (1) is cyclically subjected to heat absorption, temperature increase and temperature decrease.

## Description

### TECHNICAL FIELD

The present disclosure relates to the field of energy transforming and storage technologies, in particular to an energy transforming method and system, which can provide an amplified output using an input power supply, to drive an external device such as a power generator for generating electricity. The present disclosure particularly further relates to a distributed energy transforming method and system which can store and then amplify the inputted power supply in order to drive the external device such as a power generator for generating electricity.

### BACKGROUND

In China and other countries, the existing energy storage methods (e.g., electricity storage methods) include those based on pumping and impounding water, flywheels, chemical batteries, compressed air, and so on, which however are defective due to large investments and a low COP (Coefficient Of Performance) typically no more than 0.8. Furthermore, in systems implementing these methods, some reusable heat energy and cold energy are discarded from the systems as waste heat, resulting in waste of the energy and reduction of COP.

In addition, some existing energy storage methods need for the use of particular terrains such as mountains and seaside, and thus are limited by geographic positions when they are implemented, thereby limiting the actual promotion and application of these methods.

Therefore, there is a need for a distributed energy transforming method and system, which are capable of achieving energy storage and energy output with a significantly higher efficiency than the prior art. There is also a need for an energy transforming method and system which can reuse the waste cold and heat energy from the existing energy transforming systems and achieve the amplified electricity output by taking advantage of the high efficiency of a heat pump.

### SUMMARY

Given the above problems, the present invention provides a distributed energy transforming method and system for overcoming the problems, to eliminate defects in the prior art such as a low energy transforming efficiency, large investment, and impacts by terrains or geographic positions in actual implementation, further, the system and method in the invention are capable of easily transforming and storing valley electricity as energy during a time period with low grid power consumption, and the stored energy can be used for supplementary power generation in the time of large grid power consumption, thereby implementing high-efficiency storage and delayed output of the energy, and the overall COP is significantly improved.

According to an aspect of the invention, there is provided a distributed energy transforming method, including:
absorbing heat from a first fluid circulating in a first circulating loop by using a working medium of a heat pump so that the first fluid is cooled,
compressing the working medium with the absorbed heat by the heat pump to further raise a temperature of the working medium, and heating a second fluid circulating in a second circulating loop by the working medium with raised temperature;
transferring the heated second fluid to heat and vaporize an input pressure working medium of a pneumatic motor into pressure working medium gas for actuating the pneumatic motor, reheating the second fluid, which is decreased in temperature because of heating the input pressure working medium, by the working medium of the heat pump, and reheating the input pressure working medium of the pneumatic motor by the reheated second fluid, so that the second fluid is repeatedly heated and cooled; and
transferring the cooled first fluid to condense output pressure working medium gas of the pneumatic motor, and again absorbing heat from and thus cooling the first fluid, which is raised in temperature due to condensing the output pressure working medium gas of the pneumatic motor, by the working medium of the heat pump, in order for the again cooled first fluid to again condense the output pressure working medium gas of the pneumatic motor, so that the first fluid is repeatedly cooled and heated.

According to an embodiment, the absorbing heat from a first fluid circulating in a first circulating loop by using a working medium of a heat pump so that the first fluid is cooled, includes: absorbing heat from and thus cooling the first fluid from a first fluid storage tank by the working medium of the heat pump, and transferring the cooled first fluid to a second fluid storage tank;
the compressing the working medium with the absorbed heat by the heat pump to further raise temperature of the working medium, and heating a second fluid circulating in a second circulating loop by the working medium, includes: compressing the working medium with the absorbed heat by the heat pump to further increase the temperature of the working medium to heat the second fluid from a third fluid storage tank, and transferring the heated second fluid to a fourth fluid storage tank;
the transferring the heated second fluid to heat and vaporize an input pressure working medium of a pneumatic motor into pressure working medium gas for actuating the pneumatic motor, includes: transferring the heated second fluid from the fourth fluid storage tank to heat and vaporize the input pressure working medium of the pneumatic motor into the pressure working medium gas for actuating the pneumatic motor, and transferring the second fluid after heating the input pressure working medium back to the third fluid storage tank; and
the transferring the cooled first fluid to condense output pressure working medium gas of the pneumatic motor, includes: transferring the cooled first fluid from the second fluid storage tank to condense the output pressure working medium gas of the pneumatic motor, and returning the first fluid after the condensation to the first fluid storage tank.

According to an embodiment, the transferring the cooled first fluid from the second fluid storage tank to condense the output pressure working medium gas of the pneumatic motor, includes: transferring the cooled first fluid from the second fluid storage tank through a first condenser to condense the output pressure working medium gas of the pneumatic motor that flows into the first condenser, thereby obtaining pressure working medium liquid which is returned to a vapor generator as the input pressure working medium of the pneumatic motor; and
the heated second fluid from the fourth fluid storage tank is used to, when flowing through the vapor generator, heat and vaporize the input pressure working medium of the pneumatic motor in the vapor generator as the pressure working medium gas for actuating the pneumatic motor.

According to an embodiment, the absorbing heat from and thus cooling the first fluid from a first fluid storage tank by the working medium of the heat pump includes: causing the working medium of the heat pump to flow through the evaporator and absorb heat from the first fluid flowing into the evaporator from the first fluid storage tank, so that the working medium of the heat pump is vaporized and the first fluid is cooled;
the compressed working medium of the heat pump flows into a second condenser to heat the second fluid flowing into the second condenser from the third fluid storage tank, so that the working medium of the heat pump condenses and then transferred back to the evaporator.

According to an embodiment, before the pressure working medium liquid obtained from the condensing is transferred back to the vapor generator as the input pressure working medium of the pneumatic motor, the method further includes:
fluidly connecting the first condenser to the working medium liquid storage tank while maintaining the working medium liquid storage tank being fluidly disconnected from the vapor generator, to allow the pressure working medium liquid obtained from the condensing to flow into the working medium liquid storage tank, and
when a liquid level inside the working medium liquid storage tank is higher than a predefined first threshold, fluidly disconnecting the working medium liquid storage tank from the first condense and fluidly connecting the working medium liquid storage tank to the vapor generator, to enable the pressure working medium liquid in the working medium liquid storage tank to return to the vapor generator.

According to an embodiment, the method further includes:
when the liquid level inside the working medium liquid storage tank is lower than a predefined second threshold, fluidly disconnecting the working medium liquid storage tank from the vapor generator and fluidly connecting the working medium liquid storage tank to the first condenser to allow the pressure working medium liquid obtained from the condensing to flow into the working medium liquid storage tank, where the predefined second threshold is below the predefined first threshold.

According to an embodiment, the method may further include: when the working medium liquid storage tank is fluidly reconnected to the first condenser, driving a pneumatic power generator for electricity generation by a pressure difference between the inside of the working medium liquid storage tank and the inside of the first condenser, where the generated electricity is preferably used to assist in heating the second fluid in the fourth fluid storage tank.

According to an embodiment, the heat pump includes an electrical motor and a compressor driven by the motor, and the method further includes water-cooling the motor by at least a part of the second fluid from the third fluid storage tank and transferring the at least a part of the second fluid after the water-cooling to the fourth fluid storage tank,
and/or,
the pneumatic motor is connected to and drives a power generator (PG), and the method further includes water-cooling the power generator by at least a part of the second fluid from the third fluid storage tank and transferring the at least a part of the second fluid after the water-cooling to the fourth fluid storage tank.

According to an embodiment, the first, second, third and fourth fluid storage tanks, the working medium liquid storage tank, the evaporator, the vapor generator, the first condenser and/or the second condenser are thermally insulated. Further, other components in the whole system, such as pipelines and valves, are preferably thermally insulated.

According to an embodiment, the first fluid is salt water, and the first fluid that is heated by condensing the output pressure working medium gas of the pneumatic motor is of a temperature preferably between 0°C and 20°C, more preferably between 0°C and 12°C, or more preferably of 12°C; and the first fluid that is cooled by dissipating heat to the working medium of the heat pump is of a temperature preferably between -20°C and 0°C, more preferably between -12°C and 0°C, or more preferably of -12°C; and/or,
the second fluid is fresh water, and the second fluid that is cooled by heating the input pressure working medium is of a temperature preferably between 30°C and 50°C, more preferably between 35°C and 45°C, or more preferably of 40°C; and the second fluid that is heated by the working medium of the heat pump (I) is of a temperature preferably between 90°C and 60°C, more preferably between 80°C and 65°C, or more preferably of 75°C; and/or,
the working medium of the heat pump is CO₂ and the pressure working medium of the pneumatic motor is ammonia.

According to another aspect, there is provided a distributed energy transforming system, including a heat pump, a pneumatic motor, a first circulating loop through which a first fluid circulates, and a second circulating loop through which a second fluid circulates, where,
the heat pump is configured to absorb heat, using its working medium, from the first fluid so that the first fluid is cooled, and compress the working medium with the absorbed heat to further increase a temperature of the working medium, in order for heating the second fluid by the working medium;
the heated second fluid is used to heat and vaporize an input pressure working medium of the pneumatic motor into pressure working medium gas for actuating the pneumatic motor, and the second fluid, which is decreased in temperature because of heating the input pressure working medium, is reheated by the working medium of the heat pump in order for reheating the input pressure working medium of the pneumatic motor, so that the second fluid is repeatedly heated and cooled; and
the cooled first fluid is used to condense output pressure working medium gas of the pneumatic motor, and the working medium of the heat pump is used to again absorb heat from and hence cool the first fluid which is raised in temperature due to condensing the output pressure working medium gas of the pneumatic motor, in order for the again cooled first fluid to again condense the output pressure working medium gas of the pneumatic motor, so that the first fluid is repeatedly cooled and heated.

According to an embodiment, the system may further include a first fluid storage tank, a second fluid storage tank, a third fluid storage tank, and a fourth fluid storage tank, where the first and second fluid storage tank are disposed along the first circulating loop and configured to store the first fluid, and the third and fourth fluid storage tanks are disposed along the second circulating loop and configured to store the second fluid, and,
the first fluid storage tank is configured to store the first fluid which is heated by condensing output pressure working medium gas of the pneumatic motor, where the heat pump is further configured to absorb heat from and thus cool, by its working medium, the first fluid from the first fluid storage tank, and the second fluid storage tank is configured to store the cooled first fluid; and
the third fluid storage tank is configured to store the second fluid which is cooled by heating the input pressure working medium of the pneumatic motor, where the heat pump is further configured to heat, by its working medium, the second fluid from the third fluid storage tank, and the fourth fluid storage tank is configured to store the heated second fluid.

According to an embodiment, the system may further include a first condenser and a vapor generator, where,
the first condenser is configured to enable the cooled first fluid flowing therethrough from the second fluid storage tank to condense the output pressure working medium gas of the pneumatic motor that flows into the first condenser, thereby obtaining pressure working medium liquid which is returned to the vapor generator as the input pressure working medium of the pneumatic motor; and the vapor generator is configured to enable the heated second fluid flowing therethrough from the fourth fluid storage tank to heat and vaporize the input pressure working medium of the pneumatic motor in the vapor generator as the pressure working medium gas for actuating the pneumatic motor.

According to an embodiment, the system may further include an evaporator and a second condenser, where,
the evaporator is configured to enable the working medium of the heat pump (I) flowing therethrough to absorb heat from the first fluid flowing into the evaporator from the first fluid storage tank, so that the working medium of the heat pump is vaporized and the first fluid is cooled; and the second condenser is configured to enable the compressed working medium of the heat pump flowing therethrough to heat the second fluid flowing into the second condenser from the third fluid storage tank, so that the working medium of the heat pump condenses and then transferred back to the evaporator.

According to an embodiment, the system may further include a working medium liquid storage tank, which is positioned at a lower position than the first condenser, fluidly connected to the first condenser via a first valve, and fluidly connected to the vapor generator via a second valve,
when the first valve is open, the second valve is closed so that the first condenser is in communication with the working medium liquid storage tank 14, which is meanwhile fluidly disconnected from the vapor generator, to enable the pressure working medium liquid obtained from the condensation to flow into the working medium liquid storage tank, and
when the liquid level in the working medium liquid storage tank is higher than a predefined first threshold, the first valve is changed to be closed and the second valve is changed to be open, so that the working medium liquid storage tank is fluidly disconnected from the first condenser but is in communication with the vapor generator, to enable the pressure working medium liquid collected in the working medium liquid storage tank to return to the vapor generator.

According to an embodiment, when the liquid level inside the working medium liquid storage tank is lower than a predefined second threshold, the first valve is changed to be open and the second valve is changed to be closed, so that the working medium liquid storage tank is fluidly disconnected from the vapor generator but fluidly reconnected with the condenser, to enable the pressure working medium liquid obtained from the condensation in the first condenser to flow into the working medium liquid storage tank, where the predefined second threshold is below the predefined first threshold.

Here, the first and second valves may be electric valves.

According to an embodiment, the working medium liquid storage tank is further fluidly connected to the first condenser via a third pipeline different from a first pipeline where the first valve is located, and a third valve and a pneumatic power generator which are serially connected are arranged along the third pipeline,
the working medium liquid storage tank is further fluidly connected to the vapor generator via a fourth pipeline different from a second pipeline where the second valve is located, and a fourth valve and a gas storage tank which are serially connected are arranged along the fourth pipeline, where the gas storage tank is connected between the vapor generator and the fourth valve and configured to store the pressure working medium gas obtained from vaporization,
when the liquid level in the working medium liquid storage tank is higher than the predefined first threshold, the third valve is changed from the open state to the closed state and the fourth valve is changed from the closed state to the open state, so that the working medium liquid storage tank is fluidly disconnected from the first condenser and fluidly connected with the vapor generator given that the first valve is changed to the closed state and the second valve is changed to the open state, thereby allowing the pressure working medium liquid in the working medium liquid storage tank to return to the vapor generator; and when the liquid level in the working medium liquid storage tank is lower than the predefined second threshold, the third valve is changed from the closed state to the open state and the fourth valve is changed from the open state to the closed state, so that a pressure difference between the inside of the working medium liquid storage tank and the inside of the first condenser drives the pneumatic power generator for electricity generation, where the generated electricity is preferably used to assist in heating the second fluid in the fourth fluid storage tank, and when the pressure inside the working medium liquid storage tank balances with the pressure inside the first condenser, the first valve is changed from the closed state to the open state.

According to an embodiment, the first valve and the second valve are check valves, and the third valve and the fourth valve are electric valves.

According to an embodiment, the heat pump may include an electrical motor and a compressor (CMP) driven by the motor, at least a part of the second fluid from the third fluid storage tank is used to water-cool the motor and then is returned to the fourth fluid storage tank, and/or, the pneumatic motor is connected to and drives a power generator, and at least a part of the second fluid from the third fluid storage tank is used to water-cool the power generator and then is returned to the fourth fluid storage tank.

According to an embodiment, the first, second, third and fourth fluid storage tanks, the working medium liquid storage tank, the evaporator, the vapor generator, the first condenser and/or the second condenser are thermally insulated. Other components in the whole system, such as pipelines and valves, are preferably thermally insulated.

According to an embodiment, the first fluid is salt water, and the first fluid that is heated by condensing the output pressure working medium gas of the pneumatic motor, or the first fluid that is stored in the first fluid storage tank, is of a temperature preferably between 0°C and 20°C, more preferably between 0°C and 12°C, or more preferably of 12°C; and the first fluid that is cooled by dissipating heat to the working medium of the heat pump (I), or the first fluid stored in the second fluid storage tank is of a temperature preferably between -20°C and 0°C, more preferably between -12°C and 0°C, or more preferably of -12°C; and/or,
the second fluid is fresh water, and the second fluid that is cooled by heating the input pressure working medium or the second fluid that is stored in the third fluid storage tank is of a temperature preferably between 30°C and 50°C, more preferably between 35°C and 45°C, or more preferably of 40°C; and the second fluid that is heated by the working medium of the heat pump (I) or the second fluid that is stored in the fourth fluid storage tank is of a temperature preferably between 90°C and 60°C, more preferably between 80°C and 65°C, or more preferably of 75°C; and/or,
the working medium of the heat pump may be CO₂ and the pressure working medium of the pneumatic motor may be ammonia.

In the distributed energy transforming method and system of the invention, the heat pump heats the second fluid while cooling the first fluid, where the cooled first fluid condenses the output pressure working medium gas of the pneumatic motor and hence decreases the exhaust pressure of the pneumatic motor, meanwhile the heated second fluid heats and vaporizes the input pressure working medium of the pneumatic motor to increase the pressure of the input pressure working medium of the pneumatic motor, so that the pressure difference between the working medium inlet and the working medium outlet of the pneumatic motor is significantly improved, as a result, the power of the pneumatic motor and hence the power generation is improved. Herein the first fluid circulates in one circulating loop and the second fluid circulates in another circulating loop, without discarding energy to the outside of the whole energy transforming system, so that energy loss is avoid and COP of the overall system is improved. Furthermore, the process of condensing the output pressure working medium gas of the pneumatic motor by the first fluid is the process of absorbing and storing the heat from the output pressure working medium gas by the first fluid, and the stored heat can be absorbed by the working medium of the heat pump, thus avoiding energy loss in the system.

That is, the traditional "waste heat" does not exist in the distributed energy transforming method and system, because the "waste heat" is exploited as useful energy in other parts of the system. For example, in the case of the heat pump, when the heat pump is used to heat the second fluid so that the second fluid can be subsequently used to heat and vaporize the input pressure working medium of the pneumatic motor, the first fluid is cooled by the heat pump and can be subsequently used to condense the output pressure working medium gas of the pneumatic motor, thus the heat pump makes use of both the sensible heat of the second fluid and the latent heat of the first fluid. In another example, in the case of the pneumatic motor, the residual heat carried in the exhaust gas of the pneumatic motor after its pressure working medium works is recycled by the cooled first fluid so that subsequently the working medium of the heat pump can absorb the heat from the first fluid, thus the "waste heat" of the pneumatic motor is also exploited. Even the waste heat generated by the electrical motor of the heat pump and the power generator driven by the pneumatic motor can be recycled, through the water-cooling by the second fluid from the third fluid storage tank, to the fourth fluid storage tank for further utilization.

The distributed energy transforming method and system of the invention can drive an external device such as a power generator for electricity generation, obtaining a distributed energy storage and power generation method and system with significantly improved COP and hence improved power generation efficiency. Further, with the use of a plurality of fluid storage tanks for energy storage, nighttime valley electricity of the power grid can be stored as energy, and the energy stored in nighttime can be used for generating significantly amplified electricity in daytime with large electricity demand.

According to variants of the above embodiments, if the first and second circulating loops are removed from the distributed energy transforming method and system so that the working medium of the heat pump directly exchanges heat with the working medium of the pneumatic motor, another energy transforming method and system capable of instant amplified outputting of the input energy is obtained.

According to a variant of the embodiment, there is provided an energy transforming method including:
absorbing heat from output pressure working medium gas of a pneumatic motor by a working medium of a first heat pump, so that the output pressure working medium gas of the pneumatic motor condenses into pressure working medium liquid, which is transported as an input pressure working medium of the pneumatic motor;
compressing its working medium with the absorbed heat by the first heat pump to further raise a temperature of its working medium, so that the working medium with raised temperature heats and vaporize the input pressure working medium of the pneumatic motor into pressure working medium gas, which is used for actuating the pneumatic motor and then outputted by the pneumatic motor as the output pressure working medium gas of the pneumatic motor; and
transporting the working medium of the first heat pump which has a decreased temperature due to heating the input pressure working medium to again absorb heat from the output pressure working medium gas of the pneumatic motor, thereby the working medium of the first heat pump repeatedly conducts processes of absorbing heat, raising its temperature and lowering its temperature.

According to another variant of the embodiment, there is provided an energy transforming system including a heat pump, a pneumatic motor, a first evaporative condenser and a second evaporative condenser, where the heat pump is fluidly connected to both the first and second evaporative condensers via pipelines, and the first and second evaporative condensers are fluidly connected via a first pipeline, so that a working medium of the heat pump is allowed to circulate through the first evaporative condenser, the first pipeline and the second evaporative condenser; and the pneumatic motor is fluidly connected to both the first and second evaporative condensers via pipelines, and the first and second evaporative condensers are further fluidly connected via a second pipeline, so that a pressure working medium of the pneumatic motor is allowed to circulate through the first evaporative condenser, the second pipeline and the second evaporative condenser,
the working medium of the heat pump is used to absorb heat from output pressure working medium gas of the pneumatic motor, which thus condenses into pressure working medium liquid that is transferred as an input pressure working medium of the pneumatic motor,
the heat pump is configured to compress its working medium after absorbing the heat to increase the temperature of the working medium, which is then used for heating and vaporizing the input pressure working medium of the pneumatic motor within the second evaporative condenser as pressure working medium gas, that actuates the pneumatic motor and then output by the pneumatic motor as the output pressure working medium gas,
the working medium of the heat pump that has a decreased temperature because of heating the input pressure working medium of the pneumatic motor within the second evaporative condenser is transported to the first evaporative condenser to again absorb heat from the output pressure working medium gas of the pneumatic motor, thereby the working medium of the heat pump repeatedly undergoes processes of absorbing heat, raising its temperature and lowering its temperature.

The above description gives summary of the inventive solutions in order for clear understanding of the solutions and implementation thereof according to the specification. Embodiments of the invention are provided below for better understanding of the above and other objects, features and advantages.

### BRIEF DESCRIPTION OF THE DRAWINGS

Various advantages and benefits of the present invention would become apparent to those skilled in the art by reading the detailed description of the below preferable embodiments of the invention. The drawings are provided for illustrating some preferable embodiments and should not be construed as limiting the present invention. In addition, similar reference numerals represent the similar parts throughout the drawings, in which,
Figure 1 is a schematic diagram of a distributed energy transforming system according to an embodiment of the invention;
Figure 2 is a schematic diagram of a portion of the distributed energy transforming system according to the embodiment of the invention;
Figure 3 is a schematic diagram of a distributed energy transforming method according to an embodiment of the invention;
Figure 4 is a schematic diagram of an energy transforming system according to a varied embodiment of the invention;
Figure 5 is a schematic diagram of an energy transforming method according to another varied embodiment of the invention; and
Figure 6 is a schematic diagram of an energy transforming system according to still another varied embodiment of the invention.

### DETAILED DESCRIPTION

Some illustrative embodiments of the present disclosure will be described in more detail hereinafter with reference to the accompanying drawings. Despite of the illustrative embodiments of the present disclosure shown in the drawings, it should be understood that the present disclosure may be embodied in various forms without limitation by these described embodiments. In contrary, these embodiments are provided for more clearly understanding the present disclosure and fully conveying the scope of the present disclosure to those skilled in the art.

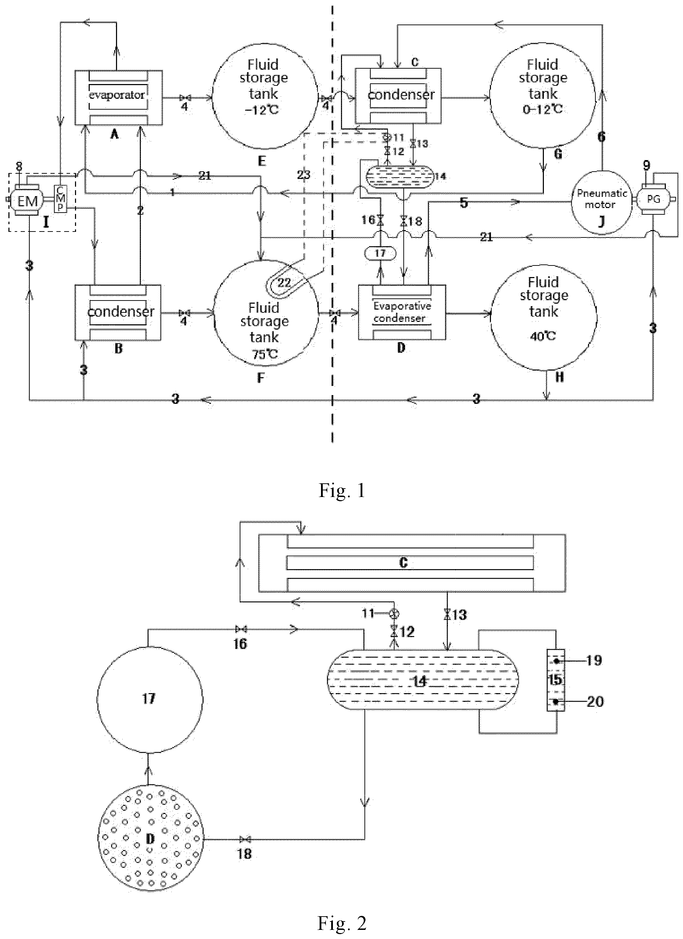

Figure 1 is a schematic diagram of a distributed energy transforming system according to an embodiment of the invention. As shown in Figure 1, the distributed energy transforming system according to the embodiment of the invention includes a heat pump I, a pneumatic motor J, a circulating loop through which salt water circulates, and a circulating loop through which fresh water circulates.

Here, the heat pump I is configured to absorb heat, using its working medium, from the salt water circulating in the circulating loop so that the salt water is cooled, and then compress the working medium with the absorbed heat to further increase the temperature of the working medium, in order for heating the fresh water in the other circulating loop using the working medium. In Figure 1, the heat pump I includes for example an electrical motor 8 and a compressor connected to the electrical motor 8, as well as working medium pipelines connected to the compressor and the medium within the pipelines.

The fresh water heated by the working medium of the heat pump is used to heat and vaporize an input pressure working medium of the pneumatic motor J into pressure working medium gas for actuating the pneumatic motor J, and then the fresh water with a decreased temperature because of heating the input pressure working medium is reheated by the working medium of the heat pump I and subsequently used to reheat the input pressure working medium of the pneumatic motor J, so that the fresh water is repeatedly heated and cooled in the other circulating loop.

The salt water cooled by the working medium of the heat pump is used to condense the output pressure working medium gas of the pneumatic motor J, so that the temperature of the salt water is increased due to the condensation, and then the salt water with the increased temperature is cooled again by the working medium of the heat pump I absorbing heat from the salt water and is used to again condense the output pressure working medium gas of the pneumatic motor J, as a result, the salt water is repeatedly cooled and heated in the corresponding circulating loop.

In the invention, the circulating loops are configured to unidirectionally circulate the salt water and the fresh water therein, respectively, so that the salt water is repeatedly cooled and heated during its circulation in the corresponding circulating loop, and the fresh salt water is repeatedly heated and cooled during its circulation in the corresponding circulating loop. The circulating loops may be designed as desired using various pipelines, valves, pumping devices, evaporators, condensers, vapor generators, and so on, and fluid storage tanks respectively for storing temporarily the salt water and the fresh water may be arranged in the circulating loops as desired. Accordingly, the present invention does not apply limitation on the implementation of the circulating loops, provided that the salt water and the fresh water can be circulated in the loops and repeatedly cooled and heated.

A condenser C in the distributed energy transforming system is configured to allow the cooled salt water from a fluid storage tank E to condense the output pressure working medium gas (i.e. ammonia gas) of the pneumatic motor J flowing to a shell pass of the condenser C into pressure working medium liquid (i.e. liquid ammonia) when flowing through a tube pass of the condenser C, and the pressure working medium liquid returns to a vapor generator D as the input pressure working medium (i.e. liquid ammonia) of the pneumatic motor J. The vapor generator D is configured to, when flowing through a tube pass of the vapor generator D, allow the heated fresh water from the fluid storage tank F to heat and vaporize the input pressure working medium of the pneumatic motor J in the shell pass of the vapor generator D as the pressure working medium gas for actuating the pneumatic motor J.

The distributed energy transforming system may further include an evaporator A and a condenser B. The evaporator A is configured to allow the working medium of the heat pump I to, when flowing through a shell pass of the evaporator A, absorb heat from the salt water from a fluid storage tank G that flows to a tube pass of the evaporator A, so that the working medium of the heat pump I vaporizes. The condenser B is configured to allow the compressed working medium of the heat pump I to, when flowing through the shell pass of the condenser B, heat the fresh water from a fluid storage tank H that flows to the tube pass of the condenser B, so that the working medium of the heat pump I condenses and then is returned to the evaporator A.

In the distributed energy transforming system of the present disclosure, the heat pump I is configured to both cool the salt water and heat the fresh water, the cooled salt water is used for condensing the output pressure working medium gas of the pneumatic motor J to reduce the exhaust pressure of the pneumatic motor J; meanwhile, the heated fresh water is used to heat and vaporize the input pressure working medium of the pneumatic motor J to increase the pressure of the input pressure working medium of the pneumatic motor J, so that a pressure difference between a working medium inlet and a working medium outlet of the pneumatic motor J, i.e., between the input pressure working medium gas and the output pressure working medium gas of the pneumatic motor J, is significantly increased, so that the output power of the pneumatic motor J is improved and thus more electricity can be generated by the pneumatic motor J. Here, the salt water is circulated within one corresponding circulating loop and the fresh water is circulated within the other circulating loop, without discarding energy from the energy transforming system to the outside, thereby avoiding energy loss from the energy transforming system and improving the COP of the energy transforming system. Furthermore, energy storage by the salt water is implemented when the salt water absorbs heat from the output pressure working medium gas of the pneumatic motor J and condenses the output pressure working medium gas, the heat stored by the salt water may be absorbed by the heat pump, so that the energy loss from the system is avoided. Also, the "waste heat" generated by the heat pump I cooling the salt water is utilized by the heat pump I to heat the fresh water, thus no actual waste heat is generated in the entire system.

In the above embodiment, the circulating loop for the salt water may be constituted by the evaporator A, the fluid storage tank E, the condenser C and the fluid storage tank G which are sequentially connected by pipelines, and the fluid storage tank G is also connected to the evaporator A via a pipeline, thereby forming the enclosed circulating loop, and pumping devices such as water pumps 4 which are used to cause the salt water to circulate through the circulating loop may be arranged at desired positions along the pipelines. For example, a water pump 4 may be provided along the pipeline between the evaporator A and the fluid storage tank E and used to transfer the cooled salt water from the evaporator A to the fluid storage tank E for storage; a water pump 4 may be provided along the pipeline between the fluid storage tank E and the condenser C and used to transfer the salt water from the fluid storage tank E to the condenser C; and a water pump 4 may be provided along the pipeline between the fluid storage tank G and the evaporator A and used to transfer the salt water from the fluid storage tank G to the evaporator A. The invention is not limited thereto, in contrary, the water pumps may be provided along the specific pipelines as actually desired.

Similarly, the circulating loop for the fresh water may be constituted by the condenser B, the fluid storage tank F, the vapor generator D and the fluid storage tank H which are sequentially connected by pipelines, and the fluid storage tank H is also connected to the condenser B via a pipeline, thereby forming the enclosed circulating loop, and pumping devices such as water pumps 4 which are used to cause the fresh water to circulate through the circulating loop may be arranged at desired positions along the pipelines. For example, a water pump 4 may be provided along the pipeline between the condenser B and the fluid storage tank F and used to transfer the heated fresh water from the condenser B to the fluid storage tank F for storage; a water pump 4 may be provided along the pipeline between the fluid storage tank F and the vapor generator D and used to transfer the fresh water from the fluid storage tank F to the vapor generator D; and a water pump 4 may be provided along the pipeline between the fluid storage tank H and the condenser B and used to transfer the fresh water from the fluid storage tank H to the condenser B. The invention is not limited thereto, in contrary, the water pumps may be provided along the specific pipelines as actually desired.

In the present disclosure, the salt water is used as the circulating fluid for one of the circulating loops, and the fresh water (i.e. ordinary water) is used as the circulating fluid for the other of the circulating loops, however, the present invention is not limited thereto, and other fluids (e.g. other types of liquid or even gas) can also be adopted without conflicts, provided that these fluids can maintain their flowable state at the desired operating temperature for the purpose of circulating in the loops and heat exchanging with the working medium of the heat pump and the pressure working medium of the pneumatic motor at the designated temperature. Those ordinary skilled in the art can easily determine the fluid suitable for circulating within the above circulating loops based on the type, pressure and operating temperature of the working medium of the heat pump and the type, pressure and operating temperature of the pressure working medium of the pneumatic motor in the system. The various embodiments of the present invention are described illustratively by taking the salt water and the fresh water as the circulating fluids. The salt water is adopted as the first fluid because it can maintain flowable at a temperature below 0°C, and can be obtained widely at a low cost. Further, the fresh water refers to ordinary water with a freezing point of 0°C.

As shown in Figure 1, the fluid storage tanks G and E are respectively configured to store salt water of different temperatures in the circulating loop for salt water, and the fluid storage tanks H and F are respectively configured to store fresh water of different temperatures in the other circulating loop for fresh water.

The fluid storage tank G is configured to store the salt water that is heated by condensing the output pressure working medium gas of the pneumatic motor J, here the salt water is generally heated to a temperature above 0°C, such as between 0°C and 20°C, or between 0°C and 12°C, and preferably a temperature of 12°C, or any other temperature as desired. With its working medium, the heat pump I absorbs heat from the salt water from the fluid storage tank G to cool the salt water, and the cooled salt water is stored in the fluid storage tank E, here the salt water is generally cooled to a temperature below 0°C, such as between -20°C and 0°C, or between -12°C and 0°C, and preferably a temperature of -12°C, or any other temperature as desired.

The fluid storage tank H is configured to store the fresh water that is cooled by heating the input pressure working medium of the pneumatic motor J, here the fresh water generally has a temperature between 20°C and 60°C, such as between 30°Cand 50°C, and between 35°C and 45°C, and preferably a temperature of 40°C, or any other temperature as desired. With its working medium, the heat pump I heats the fresh water from the fluid storage tank H, and the heated fresh water is stored in the fluid storage tank F, where the heated fresh water generally has a temperature between 90°C and 60°C, such as between 80°C and 65°C, and preferably a temperature of 75°C, or any other temperature as desired.

Here, the working medium of the heat pump I is for example carbon dioxide (CO₂), and the pressure working medium of the pneumatic motor J is for example ammonia. Despite of the illustrative examples, other kinds of media may be adopted as the working medium of the heat pump I and the pressure working medium of the pneumatic motor J, provided that these media can vaporize and condense at the predefined temperatures to exchange heat with the external fluid such as salt water or fresh water. For example, freon can also be adopted as the pressure working medium of the pneumatic motor J.

In the case where CO₂ is adopted as the working medium (i.e. refrigerant) of the heat pump I, it is preferable for the evaporator A to cool the salt water to a temperature of about -12°C in order for a high cooling COP of the evaporator A, e.g. a cooling COP of about 2 in this case. Other kinds of media may be used in the heat pump I, provided that these media allow the heat pump I to absorb heat from the salt water within the evaporator A and transfer heat to the fresh water within the condenser B.

To ensure a high COP of the heat pump in heating the fresh water within the condenser B, the fresh water in the fluid storage tank H preferably has a temperature of 40°C and the fresh water in the fluid storage tank F preferably may have a temperature of 75°C. Given the above temperature conditions, the heat pump I can achieve a COP of about 3 in heating the fresh water.

In the case where liquid ammonia (e.g. environment friendly refrigerant of liquid ammonia) is used as the pressure working medium of the pneumatic motor J, if the fresh water at an inlet of the tube pass of the vapor generator D has a temperature of 75°C and the fresh water at an outlet of the tube pass has a temperature of 40°C, the vapor pressure generated by the vaporization of the liquid ammonia in the vapor generator D is 16.7KG. Here, if the salt water at an inlet of the tube pass of the condenser C has a temperature of -12°C and the salt water at an outlet of the tube pass has a temperature of 12°C, the resulting backpressure of the pneumatic motor J is about 6.7KG, thus a net pressure difference of about 10KG, which is significantly higher than that in the prior art, is obtained for the pneumatic motor J in the inventive system, thereby improving the output power of the pneumatic motor J, and hence improving the electricity generation efficiency if the pneumatic motor J is used for driving a power generator. Of course, in practice, depending on the temperature of the fresh water flowing to the vapor generator D, the temperature of the salt water flowing to the condenser C, and so on, those skilled in the art may select other suitable working media as the pressure working medium of the pneumatic motor J, and the present invention is not limited thereto.

The components such as the fluid storage tanks, evaporators, condensers, vapor generators, pipelines and valves in the systems according to the embodiments of the present invention are preferably thermally insulated, to prevent unexpected heat exchange with the external environment.

Hereinafter, the illustrative process in which the output pressure working medium gas of the pneumatic motor J condenses in the condenser C and then returns to the vapor generator D as the input pressure working medium of the pneumatic motor J is described in detail.

As shown in Figures 1 and 2, the energy transforming system of the embodiment may further include a working medium liquid storage tank 14, which is positioned at a lower position than the first condenser C, fluidly connected to the first condenser C via a valve 13, and fluidly connected to the vapor generator D via a valve 18. Here, when the valve 13 is open, the valve 18 is closed so that the condenser C is in communication with the working medium liquid storage tank 14 and meanwhile the tank 14 is fluidly disconnected from the vapor generator D, thus the pressure working medium liquid obtained from the condensation in the condenser C can flow into the tank 14 by gravity (or by a pumping device). Additionally, when the liquid level in the tank 14 is higher than a predefined high liquid level threshold 19, the valve 13 is changed to be closed and the valve 18 is changed to be open, so that the tank 14 is fluidly disconnected from the condenser C but is in communication with the vapor generator D, thus the pressure working medium liquid collected in the tank 14 may return to the vapor generator D and subsequently be vaporized as the input pressure working medium gas of the pneumatic motor J.

Moreover, when the liquid level in the tank 14 is lower than a predefined low liquid level threshold 20, the valve 13 is changed to be open and the valve 18 is changed to be closed, so that the tank 14 is fluidly disconnected from the vapor generator D but fluid reconnected with the condenser C, thus the pressure working medium liquid obtained from the condensation in the condenser C can flow into the tank 14. The predefined low liquid level threshold 20 is lower than the predefined high liquid level threshold 19. Here, the valves 13 and 18 may be electric valves, which are driven to be open or closed as above by a sensor 15 configured for detecting the liquid level in the tank 14 when the sensor 15 detects that the liquid level is higher than the predefined high liquid level threshold 19 or lower than the predefined low liquid level threshold 20.

In another implementation of the embodiment, the valves 13 and 18 are check valves. When the valve 13 is open, the pressure working medium liquid is allowed to flow in a direction from the condenser C to the working medium liquid storage tank 14; and when the valve 18 is open, the pressure working medium liquid is allowed to flow in a direction from the tank 14 to the vapor generator D. Here, the tank 14 may be further fluidly connected to the condenser C via another pipeline different from the pipeline where the valve 13 is located, and a valve 12 and a pneumatic power generator 11 which are serially connected are arranged along the another pipeline to control the pressure working medium gas above the pressure working medium liquid within the tank 14 to flow into the condenser C. The tank 14 may be further fluidly connected to the vapor generator D via another pipeline different from the pipeline where the valve 18 is located, and a valve 16 and a gas storage tank 17 which are serially connected are arranged along the another pipeline, where the gas storage tank 17 is connected between the vapor generator D and the valve 16 and configured to separate the pressure working medium gas of the pneumatic motor coming from the vapor generator D from the pressure working medium liquid of the pneumatic motor carried by the pressure working medium gas and to temporarily store the pressure working medium gas as necessary. The value 16 is configured to control the pressure working medium gas generated in the vapor generator D to flow to the tank 14. Here, the valves 12 and 16 may be electric valves under the control of the detected signal of the sensor 15 for liquid level, and the gas storage tank 17 may be substituted by any other device having a liquid and gas separating function.

In combination with a schematic enlarged view of a portion of the distributed energy transforming system as shown in Figure 2, the operating of the working medium liquid storage tank 14 and the related valves according to the above another implementation of the embodiment is described hereinafter. When the liquid level in the tank 14 is higher than the predefined high liquid level threshold 19, the liquid level sensor 15 detects the liquid level is higher than the predefined high liquid level threshold 19 and generates an electric signal for driving the electric valve 12 to change from an open state to a close state and for driving the electric valve 16 to change from a closed state to an open state, thus the high pressure gas (i.e. the pressure working medium gas obtained from the vaporization in the vapor generator D) in the gas storage tank 17 is transferred to the tank 14 via the valve 16 so that the pressure in the tank 14 is increased, resulting in the closing of the check valve 13, and then the check valve 18 is opened due to the gravity of the pressure working medium in the tank 14 so that the tank 14 is in communication with the vapor generator D and the pressure working medium liquid can flow back to the vapor generator D from the tank 14. When the liquid level in the tank 14 is lower than the predefined low liquid level threshold 20, the liquid level sensor 15 detects the liquid level is lower than the predefined low liquid level threshold 20 and generates an electric signal for driving the electric valve 12 to change from the closed state to the open state and driving the electric valve 16 to change from the open state to the closed state, at this time, the pressure inside the tank 14 is higher than that inside the shell pass of the condenser C (through which the pressure working medium gas and liquid of the pneumatic motor J flows) so that the pressure difference therebetween can be used to drive the pneumatic power generator 11 to generate electricity, and the generated electricity preferably flows through the wire 23 to heat the heating tube 22, which in turn assists to heat the fresh water in the fluid storage tank F so that additional heat is stored in the fluid storage tank F. As the pressure inside the tank 14 decreases, the check valve 13 changes from the closed state to the open state under the action of the gravity of the pressure working medium liquid in the condenser C, and at this time, because the pressure inside the shell pass of the vapor generator D (through which the pressure working medium liquid and gas of the pneumatic motor J flows) is higher than that inside the tank 14, so that the check valve 18 changes from the open state to the closed state, and hence the tank 14 is fluidly disconnected from the vapor generator D. This approach saves significant electricity compared with the traditional way of returning the working medium using an electric pump, and is high-pressure resistant, leakage proof, and highly efficient.

In the distributed energy transforming system according to the embodiment of the invention, the heat pump I includes the electrical motor 8 and the compressor driven by the electrical motor, and at least partial fresh water from the fluid storage tank H is used for water-cooling the electrical motor 8, and the fresh water after the water-cooling returns to the fluid storage tank F; and/or, the pneumatic motor J is connected to and drive a power generator, and at least partial fresh water from the fluid storage tank H is used for water-cooling the power generator, and the fresh water after the water-cooling returns to the fluid storage tank F. In this way, the heat generated by mechanical movements of the devices in the system (including the electrical motor, the power generator and so on) can also be stored and utilized, to avoid any waste heat.

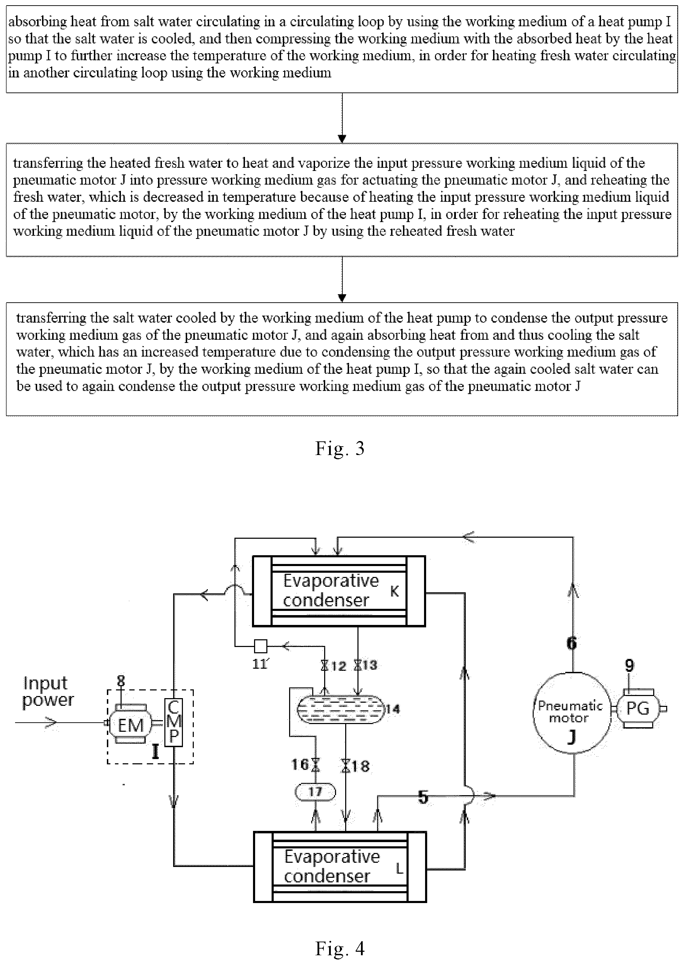

Hereinafter, a distributed energy transforming method according to an embodiment of the invention is described in combination with Figures 1 to 3. Figure 3 is a schematic diagram of the distributed energy transforming method according to the embodiment of the invention. As shown in Figure 3, the method may include:
absorbing heat from salt water circulating in a circulating loop by using the working medium of a heat pump I so that the salt water is cooled, and then compressing the working medium with the absorbed heat by the heat pump I to further increase the temperature of the working medium, in order for heating fresh water circulating in another circulating loop using the working medium;
transferring the heated fresh water to heat and vaporize the input pressure working medium liquid of the pneumatic motor J into pressure working medium gas for actuating the pneumatic motor J, and reheating the fresh water, which is decreased in temperature because of heating the input pressure working medium liquid of the pneumatic motor, by the working medium of the heat pump I, in order for reheating the input pressure working medium liquid of the pneumatic motor J by using the reheated fresh water, so that the fresh water is repeatedly heated and cooled in the another circulating loop; and
transferring the salt water cooled by the working medium of the heat pump to condense the output pressure working medium gas of the pneumatic motor J, and again absorbing heat from and thus cooling the salt water, which has an increased temperature due to condensing the output pressure working medium gas of the pneumatic motor J, by the working medium of the heat pump I, so that the again cooled salt water can be used to again condense the output pressure working medium gas of the pneumatic motor J, as a result, the salt water is repeatedly cooled and heated in the corresponding circulating loop.

In the embodiment of the present invention, the circulating loops, which are the same as those in the above embodiments, are used to unidirectionally circulate the salt water and the fresh water therein.

The working medium of the heat pump I may absorb heat from and thus cool the salt water from the fluid storage tank G, and the cooled salt water is transferred to the fluid storage tank E. The heat pump I may further compress its working medium carrying the absorbed heat to further increase the temperature of its working medium, so that the fresh water from the fluid storage tank H can be heated by the working medium of the heat pump I, and the heated fresh water is transferred to the fluid storage tank F. The heated fresh water from the fluid storage tank F may be transferred to heat and vaporize the input pressure working medium of the pneumatic motor J as the pressure working medium gas for actuating the pneumatic motor J, and the fresh water after heating the input pressure working medium is returned to the fluid storage tank H. The cooled salt water from the fluid storage tank E is transferred to condense the output pressure working medium gas of the pneumatic motor J and then returned to the fluid storage tank G.

The cooling and heating in the energy transforming method of the embodiment of the present invention can be implemented by the condenser and the evaporator. As shown in Figure 1, the cooled first fluid from the fluid storage tank E flows through the tube pass of the condenser C to condense the output pressure working medium gas (e.g. ammonia gas) of the pneumatic motor J that flows into the shell pass of the condenser C, thereby obtaining the pressure working medium liquid (i.e. liquid ammonia) which is then returned to the vapor generator D as the input pressure working medium (i.e. liquid ammonia) of the pneumatic motor J. The heated fresh water from the fluid storage tank F is used to heat and vaporize the input pressure working medium of the pneumatic motor J in the shell pass of the vapor generator D as the pressure working medium gas for actuating the pneumatic motor J, when flowing through the tube pass of the vapor generator D.

In the energy transforming method of the embodiment of the invention, the working medium of the heat pump I may flow through the shell pass of the evaporator A and absorb heat from the salt water flowing into the tube pass of the evaporator A from the fluid storage tank G, so that the working medium of the heat pump I vaporizes and the salt water is cooled. The compressed working medium of the heat pump I may flow into the shell pass of the condenser B to heat the fresh water flowing into the tube pass of the condenser B from the fluid storage tank H, so that the working medium of the heat pump I condenses and then transferred back to the evaporator A. The shell pass and the tube pass are exchangeable in the disclosure as desired without conflicts.

In the embodiment, the circulating loop for the salt water and that for the fresh water may have the same structure as those in the previous embodiments. In the disclosure, salt water is adopted as the circulating fluid in one of the circulating loops, and ordinary fresh water is adopted as the circulating fluid in the other circulating loop, but the circulating fluid in the disclosure is not limited to the salt water or fresh water, and any other fluids such as other kind of liquid or even gas, as long as they can maintain at the flowable state at the desired operating temperature for the purpose of circulating in the loops and exchanging heat with the working medium of the heat pump and the pressure working medium of the pneumatic motor at the designated temperature, can also be adopted, without conflicts. Those ordinary skilled in the art can easily determine the fluid suitable for circulating within the above circulating loops based on the type, pressure and operating temperature of the working medium of the heat pump and the type, pressure and operating temperature of the pressure working medium of the pneumatic motor in the system. The various embodiments of the present invention are described illustratively by taking the salt water and the fresh water as the circulating fluids. The salt water is adopted as the first fluid because it can maintain flowable at a temperature below 0°C and can be obtained widely at a low cost. Further, the fresh water refers to ordinary water with a freezing point of 0°C.

The fluid storage tank G is configured to store the salt water that is heated by condensing the output pressure working medium gas of the pneumatic motor J, here the salt water is generally heated to a temperature above 0°C, such as between 0°C and 20°C, or between 0°C and 12°C, and preferably a temperature of 12°C, or any other temperature as desired. With its working medium, the heat pump I absorbs heat from the salt water from the fluid storage tank G to cool the salt water, and the cooled salt water is stored in the fluid storage tank E, here the salt water is generally cooled to a temperature below 0°C, such as between -20°C and 0°C, or between -12°C and 0°C, and preferably a temperature of -12°C, or any other temperature as desired.

The fluid storage tank H is configured to store the fresh water that is cooled by heating the input pressure working medium of the pneumatic motor J, here the fresh water generally has a temperature between 20°C and 60°C, such as between 30°Cand 50°C, and between 35°C and 45°C, and preferably a temperature of 40°C, or any other temperature as desired. With its working medium, the heat pump I heats the fresh water from the fluid storage tank H, and the heated fresh water is stored in the fluid storage tank F, where the heated fresh water generally has a temperature between 90°C and 60°C, such as between 80°C and 65°C, and preferably a temperature of 75°C, or any other temperature as desired.

Here, the working medium of the heat pump I is for example carbon dioxide (CO₂), and the pressure working medium of the pneumatic motor J is for example ammonia. Despite of the illustrative examples, other kinds of media may be adopted as the working medium of the heat pump I and the pressure working medium of the pneumatic motor J, provided that these media can vaporize and condense at the predefined temperatures to exchange heat with the external fluid such as salt water or fresh water. For example, freon can also be adopted as the pressure working medium of the pneumatic motor J.

In the case where CO₂ is adopted as the working medium (i.e. refrigerant) of the heat pump I, it is preferable for the evaporator A to cool the salt water to a temperature of about -12°C in order for a high cooling COP of the evaporator A, e.g. a cooling COP of about 2 in this case. Other kinds of media may be used in the heat pump I, provided that these media allow the heat pump I to absorb heat from the salt water within the evaporator A and transfer heat to the fresh water within the condenser B.

To ensure a high COP of the heat pump in heating the fresh water within the condenser B, the fresh water in the fluid storage tank H preferably has a temperature of 40°C and the fresh water in the fluid storage tank F preferably may have a temperature of 75°C. Given the above temperature conditions, the heat pump I can achieve a COP of about 3 in heating the fresh water.

In the case where liquid ammonia (e.g. environment friendly refrigerant of liquid ammonia) is used as the pressure working medium of the pneumatic motor J, if the fresh water at an inlet of the tube pass of the vapor generator D has a temperature of 75°C and the fresh water at an outlet of the tube pass has a temperature of 40°C, the vapor pressure generated by the vaporization of the liquid ammonia in the vapor generator D is 16.7KG. Here, if the salt water at an inlet of the tube pass of the condenser C has a temperature of -12°C and the salt water at an outlet of the tube pass has a temperature of 12°C, the resulting backpressure of the pneumatic motor J is about 6.7KG, thus a net pressure difference of about 10KG, which is significantly higher than that in the prior art, is obtained for the pneumatic motor J in the inventive system, thereby improving the output power of the pneumatic motor J, and hence improving the electricity generation efficiency if the pneumatic motor J is used to drive a power generator and obtaining a COP of about 5 for the power generator. Of course, in practice, depending on the temperature of the fresh water flowing to the vapor generator D, the temperature of the salt water flowing to the condenser C, and so on, those skilled in the art may select other suitable working media as the pressure working medium of the pneumatic motor J, and the present invention is not limited thereto.

Hereinafter, the illustrative process of the energy transforming method according to the embodiment of the invention, in which the output pressure working medium gas of the pneumatic motor J condenses into the pressure working medium liquid which is returned to the vapor generator D as the input pressure working medium of the pneumatic motor J, is described in detail.

Particularly, before the pressure working medium liquid obtained from the condensing is transferred back to the vapor generator D as the input pressure working medium of the pneumatic motor J, the method may further include:
fluidly connecting the condenser C to the working medium liquid storage tank 14 while maintaining the tank 14 being fluidly disconnected from the vapor generator D, so that the pressure working medium liquid obtained from the condensing flows into the tank 14, and when the liquid level inside the tank 14 is higher than the predefined high liquid level threshold 19, fluidly disconnecting the tank 14 from the condenser C and fluidly connecting the tank 14 to the vapor generator D, to enable the pressure working medium liquid in the tank 14 to return to the vapor generator D.

Additionally, when the liquid level inside the tank 14 is lower than the predefined low liquid level threshold 20, the tank 14 is fluidly disconnected from the vapor generator D but is fluidly reconnected to the condenser C to allow the pressure working medium liquid obtained from the condensing to flow into the tank 14. Here, the predefined low liquid level threshold 20 is below the predefined high liquid level threshold.

When the tank 14 is fluidly reconnected to the condenser C, a pressure difference between the inside of the tank 14 and the inside of the shell pass of the condenser C may drive the pneumatic power generator 11 for electricity generation, and the generated electricity is preferably used to assist in heating the fresh water in the fluid storage tank F.

If the heat pump I includes an electrical motor (EM) 8 and a compressor driven by the motor 8 and the pneumatic motor J is connected to a power generator for electricity generation, in order to reuse any heat generated by mechanical movements in the system, the energy transforming method according to the embodiment of the invention may further include water-cooling the motor 8 by at least a part of the fresh water from the fluid storage tank H and transferring the part of fresh water after the water-cooling to the fluid storage tank F, and water-cooling the power generator by at least another part of the fresh water from the fluid storage tank H and transferring the another part of fresh water after the water-cooling to the fluid storage tank F.

As like in the above energy transforming system, the fluid storage tanks G, E, H and F, the working medium liquid storage tank 14, the evaporator A, the vapor generator D, the condenser C and/or the condenser D may be thermally insulated.

In the above energy transforming method according to the embodiment of the invention, the circulating loops, the fluids such as salt water and fresh water, the working medium of the heat pump and the pressure working medium of the pneumatic motor are the same as those in the energy transforming system, and thus description thereof is omitted herein.

The present invention will be further described below in combination with an specific application of the energy transforming system and method according to the embodiments of the invention in the field of electricity generation.

The overall concept of this specific application lies in a nighttime energy storage mode and a daytime electricity generation mode. In the nighttime energy storage mode, with the use of valley electricity in the nighttime, the heat pump stores heat (including sensible heat and latent heat) in the fluid storage tanks E and F using ice water and hot water as carrier media until the time for valley electricity ends. In the daytime electricity generation mode, the cold and heat energy stored in the fluid storage tanks E and F is comprehensively utilized for electricity generation. The nighttime energy storage mode and the daytime electricity generation mode alternate repeatedly.

### 1. Details of the nighttime energy storage mode

Conventionally, waste heat is regarded as very common and not utilized sometimes. For example in the case of cooling by an air conditioner, indoor cooling is required in summer, meanwhile a lot of heat is dissipated by the outdoor units of the air conditioner as dispensable waste heat. However, there is no indeed waste heat in the invention, instead, with the use of the heat pump, waste heat is stored in the large fluid storage tank F using water as the carrier medium and is then in the daytime used to heat the pressure working medium (e.g. liquid ammonia or freon) of the vapor generator D to generate high-pressure vapor for driving the pneumatic motor, so that the waste heat is utilized and the COP of heating is as high as 3.

From another point of view, for example in the case of heating by the air conditioner, indoor heating is required in winter, meanwhile a lot of cold energy is generated by the outdoor unit of the air conditioner and regarded as dispensable waste. However, there is no indeed waste cold energy in the invention, instead, with the use of the heat pump, waste cold energy is stored in the large fluid storage tank E using salt water as the carrier medium and is then in the daytime used to condense the exhaust vapor of the pneumatic motor J, here the COP of storing the cold energy is 2.

That is, typically either heat energy or cold energy, instead of both of the heat energy and the cold energy, is used, even though both heat and cold are energy. The present invention is featured by cooperatively utilize both heat and cold, thereby obtaining high COP.

### 2_{.} Details of the daytime electricity generation mode

In the case of traditional thermal power generation, exhaust vapor resulting from the expansion working of high-temperature and high-pressure vapor needs to condense into liquid, where a lot of heat of condensation which is equivalent to heat of evaporation (i.e. latent heat) of water of the corresponding amount is dissipated without further utilization in the power generation system, thus the efficiency of the entire power generation system is significantly reduced, for example, the efficiency of a super critical power generator set is no more than 45%. In the present invention, however, after the high-pressure working medium gas (e.g. ammonia or freon gas) of the pneumatic motor does expansion work inside the pneumatic motor, the resulting exhaust vapor is transferred to the condenser C, and unlike in the prior art, a lot of the dissipated heat of condensation is absorbed and stored by the ice water from the fluid storage tank E without waste, and is absorbed in the evaporator A and reused in the nighttime. Accordingly, the heat of condensation of the working medium of the pneumatic motor is stored and reused in the present invention. Further, the exhaust pressure of the pneumatic motor is significantly reduced by the ice water from the liquid storage tank E, so that the pressure difference between the working medium inlet and the working medium outlet of the pneumatic motor is increased, thereby improving the power of the pneumatic motor and hence the generated electricity.

In illustrative implementation, when the heat pump I operates with the valley electricity in the nighttime, the working medium (i.e. refrigerant) inside the shell pass of the shell-and-tube evaporator A boils and evaporates and its temperature is decreased, and absorbs heat from warm water 1 inside the tube pass of the evaporator A, thereby transferring the generated cold energy to the warm water 1 and turning the warm water 1 into ice water of -12°C which is stored in the fluid storage tank E. The refrigerant vapor from the evaporator A is compressed by the compressor of the heat pump I into the condenser B and condenses into liquid refrigerant while dissipating heat, and returns to the evaporator A via a pipeline 2, so that one cooling cycle is completed. The heat of condensation dissipated in the condenser B is transferred to the low-temperature water 3 inside the tube pass of the condenser B, so that the low-temperature water 3 is raised in temperature to 75°C and then stored in the fluid storage tank F for later usage, thereby the nighttime energy storage mode is achieved.

After 8:00am for example, a water pump 4 starts operating to transfer the high-temperature water from the fluid storage tank F to the vapor generator D, and the high-temperature water heats the liquid ammonia inside the shell pass of the vapor generator D to generate high-pressure ammonia vapor, which enters into the pneumatic motor J via a pipeline 5 to conduct the expansion working, thereby enabling the pneumatic motor to drive a power generator for electricity generation.

The exhaust vapor generated from the pneumatic motor J flows to the condenser C via a pipeline 6 and condenses while dissipating heat, to meanwhile heat the low-temperature salt water of -12°C from the fluid storage tank E to a temperature between 0°C and 12°C, and the heated salt water is then stored in the fluid storage tank G for usage in the nighttime, at the same time, the exhaust pressure of the pneumatic motor J is decreased, thereby increasing the pressure difference between the working medium inlet and the working medium outlet of the pneumatic motor and improving electricity generation. Here, the liquid ammonia in the condenser C is transferred back to the vapor generator D so that one operating cycle is completed, thereby implementing the daytime electricity generation mode.

The distributed energy transforming system of the invention is applicable to fields such as wind and solar energy storage, valley electricity storage, and thermal power generation, the but present invention is not limited thereto.

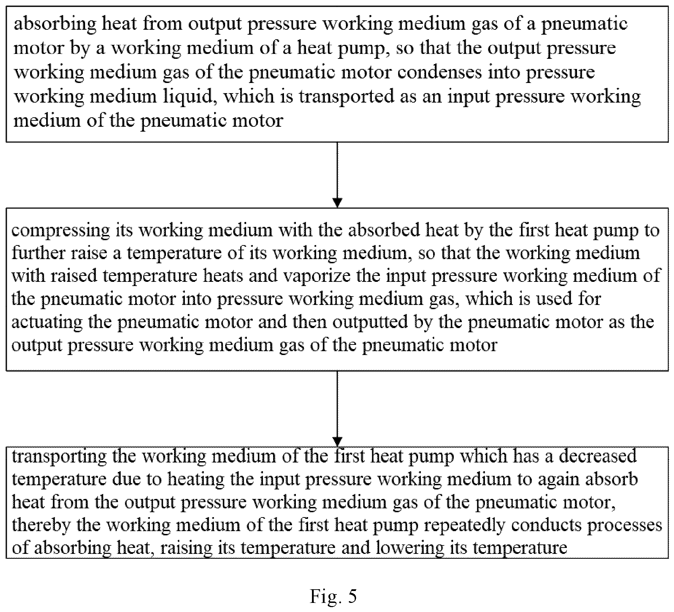

In the distributed energy transforming method and system in the above embodiments, the working medium of the heat pump exchanges heat with the working medium of the pneumatic motor indirectly, i.e. by means of the first circulating loop and the carrier medium therein as well as the second circulating loop and the carrier medium therein. However, the inventor found that such energy storage media might be omitted in some scenarios, that is, the energy storage portions, i.e. the first circulating loop and/or the second circulating loop, may be omitted from the distributed energy transforming method and system described above in combination with Figures 1 to 3, thus the working medium of the heat pump exchanges heat with the working medium of the pneumatic motor directly, thus obtaining varied energy transforming method and system which can amplify and output the input energy in real time and will be described in detail below in combination with Figures 4 and 5, in which similar numerals as Figures 1 and 2 represent parts with similar functions as in Figures 1 and 2 and thus detailed description thereof is omitted below.

As shown in Figure 4 which shows a schematic diagram of an energy transforming system according to a varied embodiment of the invention, the energy transforming system may include a heat pump I, a pneumatic motor J, and evaporative condensers K and L, the heat pump I is fluidly connected to both the evaporative condensers K and L via pipelines, and the evaporative condensers K and L are fluidly connected via a pipeline 30, so that the working medium of the heat pump I is allowed to circulate through the evaporative condensers K and L and the pipeline 30. Further, the pneumatic motor J is fluidly connected to both the evaporative condensers K and L via pipelines, and the evaporative condensers K and L are further fluidly connected via a pipeline 40, so that the pressure working medium of the pneumatic motor J is allowed to circulate through the evaporative condensers K and L and the pipeline 40.

The working medium of the heat pump I is used to absorb heat from the output pressure working medium gas of the pneumatic motor J, which thus condenses into pressure working medium liquid that is transferred as the input pressure working medium of the pneumatic motor J.

The heat pump I is configured to compress its working medium after absorbing the heat to further increase the temperature of the working medium, which is then used for heating and vaporizing the input pressure working medium of the pneumatic motor J within the evaporative condenser L as pressure working medium gas, that actuates the pneumatic motor J and then output by the pneumatic motor J as the output pressure working medium gas of the pneumatic motor J.

The working medium of the heat pump I that has a decreased temperature because of heating the input pressure working medium of the pneumatic motor J within the evaporative condenser L is transported to the evaporative condenser K to again absorb heat from the output pressure working medium gas of the pneumatic motor J, so that the working medium of the heat pump I repeatedly undergoes the above processes of absorbing heat, raising its temperature and lowering its temperature.

For example, the working medium of the heat pump I may flow through a tube pass of the evaporative condenser K and vaporize after absorbing heat from the pressure working medium of the pneumatic motor J that flows through a shell pass of the evaporative condenser K, meanwhile the output pressure working medium gas of the pneumatic motor J that flows through the shell pass of the evaporative condenser K condenses after dissipating the heat.

For example, the compressed working medium of the heat pump I condenses after dissipating heat when flowing through a tube pass of the evaporative condenser L, and the input pressure working medium of the pneumatic motor J vaporizes after absorbing the heat in a shell pass of the evaporative condenser L.

The energy transforming system in the above varied embodiment may further include a working medium liquid storage tank 14, which is positioned at a lower position than the evaporative condenser K, fluidly connected to the evaporative condenser K via a valve 13, and fluidly connected to the evaporative condenser L via a valve 18.

The working medium liquid storage tank 14 and the related valves operate in the same manners as in the above embodiments. For example, when the system operates, if the valve 13 is at the open state and the valve 18 is at the closed state, the evaporative condenser K is in communication with the tank 14 which is meanwhile maintained fluidly disconnected from the evaporative condenser L, so that the pressure working medium liquid obtained from condensing in the evaporative condenser K flows into the tank 14 and causes the rising liquid level of the pressure working medium liquid in the tank 14. When the liquid level of the pressure working medium liquid in the tank 14 becomes higher than a predefined first threshold, the valve 13 is changed to the closed state and the valve 18 is changed to the open state, so that the tank 14 is fluidly disconnected from the evaporative condenser K and fluidly connected to the evaporative condenser L, to allow the pressure working medium liquid obtained from condensing that is stored in the tank 14 to return to the evaporative condenser L.

In contrary, when the liquid level in the tank 14 is lower than a predefined second threshold, the valve 13 is changed to the open state and the valve 18 is changed to the closed state, so that the tank 14 is fluidly disconnected from the evaporative condenser L and fluidly reconnected to the evaporative condenser K, to allow the pressure working medium liquid obtained from condensing in the evaporative condenser K to flow into the tank 14. Here, the predefined second threshold is lower than the defined first threshold.

To further recycle the energy in the system, the working medium liquid storage tank 14 may be further fluidly connected to the evaporative condenser K via another pipeline different from the pipeline where the valve 13 is located, and a valve 12 and a supplementary pneumatic motor 11' which are serially connected are arranged along the another pipeline. Additionally, the tank 14 may be further fluidly connected to the evaporative condenser L via another pipeline different from the pipeline where the valve 18 is located, and a valve 16 and a gas storage tank 17 which are serially connected are arranged along the another pipeline, where the gas storage tank 17 is connected between the evaporative condenser L and the valve 16 and configured to separate the pressure working medium gas of the pneumatic motor J coming from the evaporative condenser L from the pressure working medium liquid of the pneumatic motor J carried by the pressure working medium gas and to temporarily store the pressure working medium gas as necessary. The gas storage tank 17 may be substituted by any other device having a liquid and gas separating function. As understood by those skilled in the art, a necessary liquid and gas separating device may be arranged along the pipeline 5 as desired to separate the pressure working medium gas of the pneumatic motor J coming from the evaporative condenser L from the pressure working medium liquid coming from the evaporative condenser L before the pressure working medium gas is transported to the pneumatic motor J. It would be appreciated that, in place of the pipeline 5, a pipeline leading from the gas storage tank 17 may be connected to the inlet for the pressure working medium of the pneumatic motor J, so that the gas storage tank 17 may be shared for the liquid and gas separation without additional liquid and gas separating device.

When the system operates, if the liquid level in the working medium liquid storage tank 14 becomes higher than the predefined first threshold, the valve 12 is changed from the open state to the closed state and the valve 16 is changed from the closed state to the open state, and if the liquid level in the tank 14 becomes lower than the predefined second threshold, the valve 12 is changed from the closed state to the open state and the valve 16 is changed from the open state to the closed state, so that a pressure difference between the inside of the tank 14 and the inside of the evaporative condenser K may drive the supplementary pneumatic motor 11'. When the pressure inside the tank 14 balances with the pressure inside the evaporative condenser K, the valve 13 is changed from the closed state to the open state.

In the above varied embodiment, the valves 13 and 18 may be check valves, and the valves 12 and 16 may be electric valves.

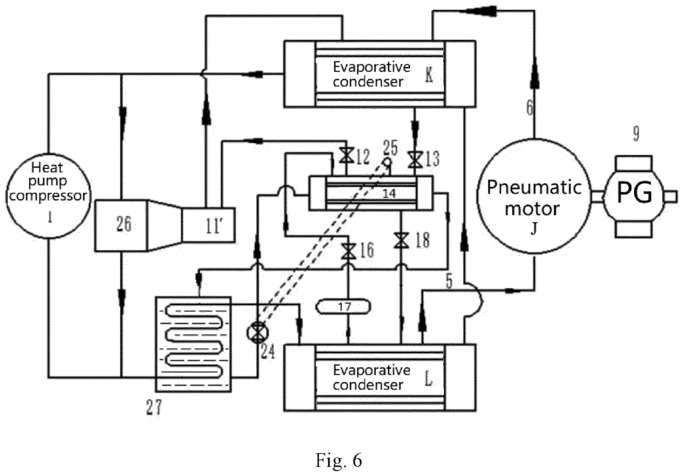

As shown in Figure 6, the system in the above varied embodiment may further include a supplementary heat pump 26 driven by the supplementary pneumatic motor 11', the heat pump 26 extracts and compresses at least a part of the working medium of the heat pump I from the evaporative condenser K to raise the temperature of the part of the working medium, and the part of the working medium with the raised temperature joins with the working medium compressed and raised in temperature by the heat pump I and flows to the evaporative condenser L. When the supplementary pneumatic motor 11' drives the supplementary heat pump 26, the energy output from the supplementary pneumatic motor 11' can be fully utilized; in addition, by extracting some working medium of the heat pump I from the evaporative condenser K by the supplementary heat pump 26, the temperature of the output pressure working medium gas of the pneumatic motor J that flows to the evaporative condenser K is further decreased, and the extracted working medium is compressed and hence raised in temperature by the supplementary heat pump 26, so that the heat transferred to the evaporative condenser L is further increased, that is, with the use of the supplementary heat pump 26 and the evaporative condensers K and L, the pressure difference between the inlet and the outlet for the pressure working medium gas of the pneumatic motor J is further increased, thereby further improving the power of the pneumatic motor J.

In a further variant of the embodiment, the system may further include a liquid tank 27, as shown in Figure 6 which shows a schematic diagram of an energy transforming system according to still another varied embodiment of the invention. Here, the working medium liquid storage tank 14 is a shell-and-tube liquid storage tank capable of exchanging heat between two working media, and the pressure working medium liquid and gas of the pneumatic motor J may flow through a shell pass of the shell-and-tube liquid storage tank. The working medium output from the supplementary heat pump 26 and/or the heat pump I heats the liquid (such as water) in the liquid tank 27, and the heated liquid from the liquid tank 27 is transported to a tube pass of the shell-and-tube liquid storage tank to heat the pressure working medium liquid in the shell pass of the shell-and-tube liquid storage tank before the pressure working medium liquid is transported to the evaporative condenser L.

If the temperature of the pressure working medium liquid in the working medium liquid storage tank 14 differs from the temperature of the pressure working medium liquid and/or gas in the evaporative condenser L, transporting of the pressure working medium liquid from the tank 14 into the evaporative condenser L would affect the pressure stability of the pressure working medium gas transported from the evaporative condenser L to the pneumatic motor J, and hence the stability of the output power of the pneumatic motor J would be affected. Therefore, the inventor thought of the above approach to preheat the pressure working medium liquid in the tank 14, so that the influence of the pressure working medium liquid flowing into the evaporative condenser L on the temperature of the pressure working medium in the evaporative condenser L is reduced or eliminated, and thence the pressure of the input pressure working medium gas of the pneumatic motor J is more stable.

More details of the above solutions will be given below by way of examples. For example, when the liquid level of the pressure working medium of the pneumatic motor inside the working medium liquid storage tank 14 (which is a shell-and-tube liquid storage tank or any other device capable of heat exchanging between different media in this example) is higher than the predefined high liquid level threshold 19, before the tank 14 becomes fluidly connected to the evaporative condenser L, a pump 24 fluidly connected to the liquid tank 27 is triggered to transport the heated liquid from the liquid tank 27 to the tube pass of the tank 14 in order to heat the pressure working medium liquid (e.g. CO₂ liquid of 0°C) of the pneumatic motor in the shell pass of the tank 14, e.g. to a temperature of 30°C and a pressure of 72 kg/cm². When the predefined temperature or pressure (as detected by a temperature or pressure sensor 25) of the pressure working medium liquid in the tank 14 is reached, the pump 24 is stopped and the pressure working medium liquid in the tank 14 is allowed to flow into the evaporative condenser L, thus the valves 16 and 18 are opened and the valves 12 and 13 are closed so that the tank 14 is fluidly disconnected from the evaporative condenser K but is fluidly connected to the evaporative condenser L, the heated pressure working medium liquid (i.e. the CO₂ liquid) from the tank 14 automatically flows into the evaporative condenser L due to gravity. Thus, as a result of the similarity or consistence between the temperature of the pressure working medium liquid in the tank 14 and the evaporative condenser L, the vapor pressure output by the evaporative condenser L is beneficially maintained stable without little fluctuation, thus the rotation speed of the pneumatic motor and hence the output voltage and current of the power generator driven by the pneumatic motor is stable. As the liquid level of the pressure working medium inside the tank 14 decreases to be below the predefined low liquid level threshold 20, the valves 16 and 18 are closed, at this time, the pressure in the tank 14 is the same as that in the evaporative condenser L and is significantly higher than the pressure in the evaporative condenser K. Thus, when the valve 12 is opened, the pressure working medium gas (e.g. high pressure CO₂ gas) remaining in the tank 14 flows into and drives the supplementary pneumatic motor 11' to rotate, causing operating of the supplementary heat pump 26, which extracts the working medium gas of the heat pump I from the tube pass of the evaporative condenser K so that the pressure working medium of the pneumatic motor J in the shell pass of the evaporative condenser k is further cooled.

According to another variant embodiment of the invention, an energy transforming method is further provided, as shown in Figure 5, and the method lies in below.

The working medium of the heat pump I absorbs heat from and hence condenses the output pressure working medium gas of the pneumatic motor J into pressure working medium liquid, which is transported as the input pressure working medium of the pneumatic motor J. Here, absorbing the heat from the output pressure working medium gas of the pneumatic motor J by the working medium of the heat pump I may be implemented by direct heat exchanging between these two working media in a heat exchanger, or in an indirect manner in which the working medium of the heat pump I absorbs heat from another medium through a heat exchanger and the another medium absorbs heat from the output pressure working medium gas of the pneumatic motor J through another heat exchanger, but the invention is not limited thereto.

The working medium with the absorbed heat is compressed by the heat pump I and thus raised in temperature, and is then used to heat and vaporize the input pressure working medium of the pneumatic motor J as pressure working medium gas, which actuates the pneumatic motor J and is output by the pneumatic motor J as the output pressure working medium gas of the pneumatic motor J. Similarly, heating of the input pressure working medium of the pneumatic motor J by the working medium with raised temperature of the heat pump I may be implemented by direct heat exchanging between these two working media in a heat exchanger, or in an indirect manner in which the working medium with raised temperature of the heat pump I heats another medium through a heat exchanger and the another medium heats the input pressure working medium of the pneumatic motor J through another heat exchanger, but the invention is not limited thereto.

The working medium of the heat pump I, that has been cooled by heating the input pressure working medium, is transported to again absorb heat from the output pressure working medium gas of the pneumatic motor J, so that the working medium of the heat pump I repeatedly conducts the processes of absorbing heat and raising and lowering its temperature.

In the above method, the working medium of the heat pump I repeatedly conducts the processes of absorbing heat, and raising and lowering its temperature, while the pressure working medium of the pneumatic motor J repeatedly conducts the processes of dissipating heat and condensing, absorbing heat and vaporizing, and lowering its temperature by working.

As shown in Figure 4, absorbing heat from and condensing the output pressure working medium gas of the pneumatic motor J by the working medium of the heat pump I may be implemented in the evaporative condenser K. The working medium of the heat pump I absorbs heat and vaporizes when flowing through the tube pass of the evaporative condenser K, while the output pressure working medium gas of the pneumatic motor J may dissipate heat and condense when flowing through the shell tube of the evaporative condenser K. Similarly, heating of the input pressure working medium of the pneumatic motor J by the working medium with raised temperature of the heat pump I may be conducted in the evaporative condenser L, where the compressed working medium of the heat pump I dissipates heat and condenses when flowing through the tube pass of the evaporative condenser L, while the input pressure working medium of the pneumatic motor J absorbs heat and vaporizes in the shell pass of the evaporative condenser L. Of course, the media flowing through the tube pass and the shell pass of the evaporative condenser K may be exchanged, as long as the above heat exchange can be conducted between the media, and the invention is not limited thereto.

The manner of transporting the pressure working medium liquid as the input pressure working medium of the pneumatic motor J is the same as that described above in combination with Figures 1 to 3, and is briefly described below merely.

Before the pressure working medium liquid is transported as the input pressure working medium of the pneumatic motor J, the energy transforming method may further include:
fluidly connecting the evaporative condenser K to the working medium liquid storage tank 14, while maintaining the tank 14 as being fluidly disconnected from the evaporative condenser L, to allow the pressure working medium liquid obtained from condensing in the evaporative condenser K to flow into the tank 14;
when the liquid level within the working medium liquid storage tank 14 is higher than the predefined first threshold, fluidly disconnecting the tank 14 from the evaporative condenser K and fluidly connecting the tank 14 to the evaporative condenser L, to allow the pressure working medium liquid obtained from the condensing in the tank 14 to return to the second evaporative condenser L; and
when the liquid level within the working medium liquid storage tank 14 is lower than the predefined second threshold, fluidly disconnecting the tank 14 from the evaporative condenser L, and fluidly reconnecting the tank 14 to the evaporative condenser K, to allow the pressure working medium liquid obtained from the condensing in the evaporative condenser K to flow into the tank 14, here the predefined second threshold is lower than the predefined first threshold.

To further reuse the energy in the system, the energy transforming method may further include: when the working medium liquid storage tank 14 becomes fluidly connected to the evaporative condenser K again, a pressure difference between the inside of the working medium liquid storage tank 14 and the inside of the evaporative condenser K is used to drive the supplementary pneumatic motor 11'.

In the energy transforming system and method according to the above two varied embodiments, to further recycle the waste heat generated in the power generation process of the pneumatic motor, the pneumatic motor J is connected to and drives a power generator, at least a part of the working medium with lowered temperature of the heat pump I that is output from the evaporative condenser L is used to cool the power generator connected with the pneumatic motor J, and subsequently the part of the working medium is transported back to the evaporative condenser K, so that the heat generated by the movement of the power generator is recycled.

In the method, similar to the system described above in combination with Figure 6, it is also possible to utilize the pressure difference between the working medium inlet and the working medium outlet of the pneumatic motor J, and preheat the pressure working medium liquid of the pneumatic motor stored in the working medium liquid storage tank 14. Brief description will be given below in combination with Figure 6.

As shown in Figure 6, according to the method, the supplementary heat pump 26 driven by the supplementary pneumatic motor 11' is further included to extract from the evaporative condenser K at least a part of the working medium of the heat pump I and compress the same to raise temperature thereof, then the part of the working medium with the raised temperature joins with the working medium compressed and raised in temperature by the heat pump I and flows to the evaporative condenser L.

In a further varied embodiment, a liquid tank 27 may be further included in the method, as shown in Figure 6. Here, the working medium liquid storage tank 14 is a shell-and-tube liquid storage tank capable of exchanging heat between two working media, and the pressure working medium liquid and gas of the pneumatic motor J may flow through a shell pass of the shell-and-tube liquid storage tank. The working medium output from the supplementary heat pump 26 and/or the heat pump I heats the liquid in the liquid tank 27, and the heated liquid from the liquid tank 27 is transported to a tube pass of the shell-and-tube liquid storage tank to heat the pressure working medium liquid in the shell pass of the shell-and-tube liquid storage tank before the pressure working medium liquid is transported to the evaporative condenser L.

Particularly, when the liquid level of the pressure working medium of the pneumatic motor inside the tank 14 is higher than the predefined high liquid level threshold 19, before the tank 14 becomes fluidly connected to the evaporative condenser L, a pump 24 fluidly connected to the liquid tank 27 is triggered to transport the heated liquid from the liquid tank 27 to the tube pass of the tank 14 in order to heat the pressure working medium liquid (e.g. CO₂ liquid of 0°C) of the pneumatic motor in the shell pass of the tank 14, e.g. to a temperature of 30°C and a pressure of 72 kg/cm². When the predefined temperature or pressure (as detected by a temperature or pressure sensor 25) of the pressure working medium liquid in the tank 14 is reached, the pump 24 is stopped and the pressure working medium liquid in the tank 14 is allowed to flow into the evaporative condenser L, thus the valves 16 and 18 are opened and the valves 12 and 13 are closed so that the tank 14 is fluidly disconnected from the evaporative condenser K but is fluidly connected to the evaporative condenser L, the heated pressure working medium liquid (i.e. CO₂ liquid) from the tank 14 automatically flows into the evaporative condenser L due to gravity. Thus, as a result of the similarity or consistence between the temperature of the pressure working medium liquid in the tank 14 and the evaporative condenser L, the vapor pressure output by the evaporative condenser L is beneficially maintained stable without little fluctuation, thus the rotation speed of the pneumatic motor and hence the output voltage and current of the power generator driven by the pneumatic motor is stable. As the liquid level of the pressure working medium inside the tank 14 decreases to be below the predefined low liquid level threshold 20, the valves 16 and 18 are closed, at this time, the pressure in the tank 14 is the same as that in the evaporative condenser L and is significantly higher than the pressure in the evaporative condenser K. Thus, when the valve 12 is opened, the pressure working medium gas (e.g. high pressure CO₂ gas) remaining in the tank 14 flows into and drives the supplementary pneumatic motor 11' to rotate, causing operating of the supplementary heat pump 26, which extracts the working medium gas of the heat pump I from the tube pass of the evaporative condenser K so that the pressure working medium of the pneumatic motor J in the shell pass of the evaporative condenser k is further cooled.

In the energy transforming system and method according to the above two varied embodiments, the evaporative condensers K and L and/or the working medium liquid storage tank 14 may be thermally insulated. Off course, whether the various components and pipelines in the entire system are thermally insulated depends on actual needs. Further, ammonia NH₃ may be adopted as the working medium of the heat pump I, and carbon dioxide CO₂ may be adopted as the pressure working medium of the pneumatic motor J.

In the energy transforming system and method according to the above varied embodiments, for example, it may be regulated that the temperature and pressure of ammonia at the working medium inlet of the heat pump I are 0°C and 3.38kg/cm², respectively, and/or the temperature and pressure of ammonia at the working medium outlet of the heat pump I are 40°C and 14.8kg/cm², respectively, and/or the temperature and pressure of CO₂ at the pressure working medium inlet of the pneumatic motor J are 40°C and 96kg/cm², respectively, and/or the temperature and pressure of CO₂ at the pressure working medium outlet of the pneumatic motor J are 0°C and 35kg/cm², respectively. The above is provided merely as an example, and it would occur to those skilled in the art that the temperature and pressure of the working media at various positions may be adjusted according to various parameters of parts in the system, such as the COP of the heat pump I (including COPs of cooling and heating), the working medium of the heat pump I, the COP of the pneumatic motor J, the pressure working medium of the pneumatic motor J, and heat exchange efficiency of the evaporative condenser, so that the energy transforming system can operate generally stably and in balance. Under the conditions of the above temperature and pressure of the working media, the COP of the heat pump I can reach 5.76, for example, with its heating COP being 3.36 and its cooling COP being 2.4.

For example, when the heat pump I receiving the input grid power drives the connected compressor to operate, the liquid ammonia is drawn from the tube pass of the evaporative condenser K and vaporizes, thereby achieving a cooling COP of 2.4, meanwhile the generated cold energy condenses the CO₂ gas in the shell pass of the evaporative condenser K, and the heat dissipated in the condensing of the CO₂ is absorbed by the ammonia, so that the overall temperature of the evaporative condenser K is maintained in a stable range, and the balanced absorbing of heat (NH₃) and balanced dissipating of heat (CO₂) lasts.

At the time of cooling by the compressor of the heat pump I, the ammonia gas is compressed by the compressor and then flows into the tube pass of the evaporative condenser L and dissipates heat, thereby achieving COP of heating of 3.36, meanwhile the dissipated heat is used to heat the CO₂ liquid in the shell pass of the evaporative condenser L, so that the liquidation of ammonia is conducted simultaneously with the vaporization and expansion of CO₂, and the obtained high-pressure CO₂ gas enters into the pneumatic motor J and expands for working, thereby driving the power generator connected to the pneumatic motor J for electricity generation. If the overall efficiency of power generation of the pneumatic motor is 35%, the resultant COP is (3.36+2.4)*35%=2, thus the efficiency of power generation of the whole system can be significantly improved relative to the prior art.

As seen from the above varied embodiments, the energy transforming system and method are advantageous as follows.
1. The closed circulating system of the working medium of the heat pump exchanges heat directly with the closed circulating system of the pneumatic motor, and heat energy and cold energy generated in the system are comprehensively utilized to maintain the temperature balance between the evaporative condensers K and L; also, by increasing the pressure at the working medium inlet of the pneumatic motor and decreasing the pressure at the working medium outlet of the pneumatic motor, the pressure difference between the inlet and the outlet is increased, thereby improving the power of the pneumatic motor and hence the power generation efficiency.
2. All of the devices, pipelines and valves in the whole system may be thermally insulated, so that the operation of the system will not be affected by the external environmental temperature.
3. Few electrical devices except the electric valves (e.g. electromagnetic valves) 12 and 16 are included in the system, power consumption is reduced relative to a thermal power plant which consumes 10-20% of the generated power.
4. The supplementary heat pump 26 further increases the pressure difference between the working medium inlet and the working medium outlet of the pneumatic motor J.
5. The preheating of the pressure working medium liquid of the pneumatic motor stored in the liquid storage tank 14 benefits the stability of output power of the pneumatic motor J.

Lots of details are given in the specification. However, it would be appreciated that embodiments of the invention can be implemented without these details. In some embodiments, well know approaches, structures and technique are not given in detail to avoid obscuring the understanding of the specification.

It would be appreciated by those skilled in the art that modules of devices in an embodiment may be adaptively modified and arranged in one or more devices of the embodiment. Several modules in the embodiment may be combined into one module or unit or component, or a module may be divided into multiple modules or units or components. All features and hence any method or process or unit of a device disclosed in the specification may be combined in any manner, unless at least some of the features and/or processes or modules are conflicting. Unless otherwise specified, each feature disclosed in the specification (including the appending claims, abstract and drawings) may be replaced by a substitute feature with the same, equivalent or similar purpose.

It should be noted that the above embodiments are provided for illustrating but not limiting the invention, and those skilled in the art can think of alternative embodiments without departing from the scope defined by the appending claims.

## Claims

1. An energy transforming method, comprising:
absorbing heat from output pressure working medium gas of a pneumatic motor (J) by a working medium of a first heat pump (I), so that the output pressure working medium gas of the pneumatic motor (J) condenses into pressure working medium liquid, which is transported as an input pressure working medium of the pneumatic motor (J);
compressing its working medium with the absorbed heat by the first heat pump (I) to further raise a temperature of its working medium, so that the working medium with raised temperature heats and vaporize the input pressure working medium of the pneumatic motor (J) into pressure working medium gas, which is used for actuating the pneumatic motor (J) and then outputted by the pneumatic motor (J) as the output pressure working medium gas of the pneumatic motor (J); and
transporting the working medium of the first heat pump (I) which has a decreased temperature due to heating the input pressure working medium to again absorb heat from the output pressure working medium gas of the pneumatic motor (J), thereby the working medium of the first heat pump (I) repeatedly conducts processes of absorbing heat, raising its temperature and lowering its temperature.

2. The method of claim 1, wherein,
the absorbing heat from output pressure working medium gas of a pneumatic motor (J) by a working medium of a first heat pump (I) so that the output pressure working medium gas of the pneumatic motor (J) condenses into pressure working medium liquid is conducted in a first evaporative condenser (K), and preferably, the working medium of the first heat pump (I) absorbs heat and vaporizes when flowing through a tube pass of the first evaporative condenser (K), and the output pressure working medium gas of the pneumatic motor (J) dissipates heat and condenses when flowing through a shell pass of the first evaporative condenser (K); and/or,
the heating the input pressure working medium of the pneumatic motor (J) by the working medium with raised temperature of the first heat pump (I) is conducted in a second evaporative condenser (L), and preferably, the compressed working medium of the first heat pump (I) dissipates heat and condenses when flowing through a tube pass of the second evaporative condenser (L), and the input pressure working medium of the pneumatic motor (J) absorbs heat in a shell pass of the second evaporative condenser (L).

3. The method of claim 1 or 2, wherein before the pressure working medium liquid is transported as the input pressure working medium of the pneumatic motor (J), the method further comprises:
fluidly connecting the first evaporative condenser (K) to the working medium liquid storage tank (14) while maintaining the tank (14) being fluidly disconnected from the second evaporative condenser (L), so that the pressure working medium liquid obtained from condensing in the first evaporative condenser (K) flows into the working medium liquid storage tank (14), and
when a liquid level in the working medium liquid storage tank (14) becomes higher than a predefined first threshold, fluidly disconnecting the working medium liquid storage tank (14) from the first evaporative condenser (K) and fluidly connecting the working medium liquid storage tank (14) to the second evaporative condenser (L), to allow the pressure working medium liquid obtained from condensing that is stored in the working medium liquid storage tank (14) to return to the second evaporative condenser (L).

4. The method of claim 3, further comprising:
when the liquid level in the working medium liquid storage tank (14) is lower than a predefined second threshold, fluidly disconnecting the working medium liquid storage tank (14) from the second evaporative condenser (L) and fluidly reconnecting the working medium liquid storage tank (14) to the first evaporative condenser (K), to allow the pressure working medium liquid obtained from condensing in the first evaporative condenser (K) to flow into the working medium liquid storage tank (14), wherein the predefined second threshold is lower than the defined first threshold.

5. The method of claim 4, further comprising: driving a supplementary pneumatic motor (11') by a pressure difference between the inside of the working medium liquid storage tank (14) and the inside of the first evaporative condenser (K), when the working medium liquid storage tank (14) is fluidly reconnected to the first evaporative condenser (K).

6. The method of claim 5, wherein
a second heat pump (26) is driven by the supplementary pneumatic motor (11') to extract and compress at least a part of the working medium of the first heat pump (I) from the first evaporative condenser (K) to raise the temperature of the part of the working medium, wherein the part of the working medium with raised temperature joins with the working medium compressed and raised in temperature by the first heat pump (I) and flows to the second evaporative condenser (L); and
preferably, the working medium liquid storage tank (14) is a shell-and-tube liquid storage tank, and the pressure working medium liquid and gas of the pneumatic motor (J) flows through a shell pass of the shell-and-tube liquid storage tank; the working medium output from the second heat pump (26) and/or the first heat pump (I) heats the liquid in a liquid tank (27), and the heated liquid from the liquid tank (27) is transported to a tube pass of the shell-and-tube liquid storage tank to heat the pressure working medium liquid in the shell pass of the shell-and-tube liquid storage tank before the pressure working medium liquid is transported to the second evaporative condenser (L).

7. The method of any one of claims 1 to 6, wherein the first and second evaporative condensers (K, L) and/or the working medium liquid storage tank (14) are thermally insulated.

8. The method of any one of claims 1 to 7, wherein
the working medium of the first heat pump (I) is NH₃ and the pressure working medium of the pneumatic motor (J) is CO₂.

9. An energy transforming system, comprising a heat pump (I), a pneumatic motor (J), a first evaporative condenser (K) and a second evaporative condenser (L),
wherein the heat pump (I) is fluidly connected to both the first and second evaporative condensers (K, L) via pipelines, and the first and second evaporative condensers (K, L) are fluidly connected via a first pipeline, so that a working medium of the heat pump (I) is allowed to circulate through the first evaporative condenser (K), the first pipeline (30) and the second evaporative condenser (L); and the pneumatic motor (J) is fluidly connected to both the first and second evaporative condensers (K, L) via pipelines, and the first and second evaporative condensers (K, L) are further fluidly connected via a second pipeline, so that a pressure working medium of the pneumatic motor (J) is allowed to circulate through the first evaporative condenser (K), the second pipeline and the second evaporative condenser (L),
wherein the working medium of the heat pump (I) is used to absorb heat from output pressure working medium gas of the pneumatic motor (J), which thus condenses into pressure working medium liquid that is transferred as an input pressure working medium of the pneumatic motor (J),
the heat pump (I) is configured to compress its working medium after absorbing the heat to increase the temperature of the working medium, which is then used for heating and vaporizing the input pressure working medium of the pneumatic motor (J) within the second evaporative condenser (L) as pressure working medium gas, that actuates the pneumatic motor (J) and then output by the pneumatic motor (J) as the output pressure working medium gas,
the working medium of the heat pump (I) that has a decreased temperature because of heating the input pressure working medium of the pneumatic motor (J) within the second evaporative condenser (L) is transported to the first evaporative condenser (K) to again absorb heat from the output pressure working medium gas of the pneumatic motor (J), thereby the working medium of the heat pump (I) repeatedly undergoes processes of absorbing heat, raising its temperature and lowering its temperature.

10. The system of claim 9, wherein,
the working medium of the heat pump (I) flows through a tube pass of the first evaporative condenser (K) and vaporizes after absorbing heat, meanwhile the output pressure working medium gas of the pneumatic motor (J) flows to a shell pass of the first evaporative condenser (K) and condenses after dissipating the heat,
and/or,
the compressed working medium of the heat pump (I) condenses after dissipating heat when flowing through a tube pass of the second evaporative condenser (L), and the input pressure working medium of the pneumatic motor (J) vaporizes after absorbing the heat in a shell pass of the second evaporative condenser (L).

11. The system of claim 9 or 10, further comprising a working medium liquid storage tank (14), which is positioned at a lower position than the first evaporative condenser (K), fluidly connected to the first evaporative condenser (K) via a first valve (13), and fluidly connected to a second evaporative condenser (L) via a second valve (18),
wherein when the first valve (13) is at an open state and the second valve (18) is at a closed state, the first evaporative condenser (K) is in communication with the working medium liquid storage tank (14) which is meanwhile maintained fluidly disconnected from the second evaporative condenser (L), so that the pressure working medium liquid obtained from condensing in the first evaporative condenser (K) flows into the working medium liquid storage tank (14), and
when a liquid level in the working medium liquid storage tank (14) becomes higher than a predefined first threshold, the first valve (13) is changed to the closed state and the second valve (18) is changed to the open state, so that the working medium liquid storage tank (14) is fluidly disconnected from the first evaporative condenser (K) and fluidly connected to the second evaporative condenser (L), to allow the pressure working medium liquid obtained from condensing that is stored in the working medium liquid storage tank (14) to return to the second evaporative condenser (L).

12. The system of claim 11, wherein,
when the liquid level in the working medium liquid storage tank (14) is lower than a predefined second threshold, the first valve (13) is changed to the open state and the second valve (18) is changed to the closed state, so that the working medium liquid storage tank (14) is fluidly disconnected from the second evaporative condenser (L) and fluidly reconnected to the first evaporative condenser (K), to allow the pressure working medium liquid obtained from condensing in the first evaporative condenser (K) to flow into the working medium liquid storage tank (14), wherein the predefined second threshold is lower than the defined first threshold.

13. The system of claim 12, wherein,
the working medium liquid storage tank (14) is further fluidly connected to the first evaporative condenser (K) via a third pipeline different from a pipeline where the first valve (13) is located, and a third valve (12) and a supplementary pneumatic motor (11') which are serially connected are arranged along the third pipeline,
the working medium liquid storage tank (14) is further fluidly connected to the second evaporative condenser (L) via a fourth pipeline different from a pipeline where the second valve (18) is located, and a fourth valve (16) and a gas storage tank (17) which are serially connected are arranged along the fourth pipeline, wherein the gas storage tank (17) is connected between the second evaporative condenser (L) and the fourth valve (16) and configured to store the pressure working medium gas resulting from the vaporization,
when the liquid level in the working medium liquid storage tank (14) is higher than the predefined first threshold, the third valve (12) is changed from the open state to the closed state and the fourth valve (16) is changed from the closed state to the open state; and when the liquid level in the working medium liquid storage tank (14) is lower than the predefined second threshold, the third valve (12) is changed from the closed state to the open state and the fourth valve (16) is changed from the open state to the closed state, so that a pressure difference between the inside of the working medium liquid storage tank (14) and the inside of the first evaporative condenser (K) drives the supplementary pneumatic motor (11'), and when the pressure inside the working medium liquid storage tank (14) balances with the pressure inside the first evaporative condenser (K), the first valve (13) is changed from the closed state to the open state.

14. The system of claim 14, wherein the first valve (13) and the second valve (18) are check valves, and the third valve (12) and the fourth valve (16) are electric valves.

15. The system of claim 13, further comprising:
a second heat pump (26) driven by the supplementary pneumatic motor (11') and configured to extract and compress at least a part of the working medium of the first heat pump (I) from the first evaporative condenser (K) to raise the temperature of the part of the working medium, wherein the part of the working medium with raised temperature joins with the working medium compressed and raised in temperature by the first heat pump (I) and flows to the second evaporative condenser (L);
preferably, the system further comprises a liquid tank (27), the working medium liquid storage tank (14) is a shell-and-tube liquid storage tank, and the pressure working medium liquid and gas of the pneumatic motor (J) is allowed to flow through a shell pass of the shell-and-tube liquid storage tank; the working medium output from the second heat pump (26) and/or the first heat pump (I) heats the liquid in the liquid tank (27), and the heated liquid from the liquid tank (27) is transported to a tube pass of the shell-and-tube liquid storage tank to heat the pressure working medium liquid in the shell pass of the shell-and-tube liquid storage tank before the pressure working medium liquid is transported to the second evaporative condenser (L).

16. The system of any one of claims 9 to 15, wherein the first and second evaporative condensers (K, L) and/or the working medium liquid storage tank (14) are thermally insulated.

17. The system of any one of claims 9 to 16, wherein the working medium of the first heat pump (I) is NH₃ and the pressure working medium of the pneumatic motor (J) is CO₂.

18. A distributed energy transforming method, comprising:
absorbing heat from a first fluid circulating in a first circulating loop by using a working medium of a heat pump (I) so that the first fluid is cooled,
compressing the working medium with the absorbed heat by the heat pump (I) to further raise a temperature of the working medium, and heating a second fluid circulating in a second circulating loop by the working medium with raised temperature;
transferring the heated second fluid to heat and vaporize an input pressure working medium of a pneumatic motor (J) into pressure working medium gas for actuating the pneumatic motor (J), reheating the second fluid, which is decreased in temperature because of heating the input pressure working medium, by the working medium of the heat pump (I), and reheating the input pressure working medium of the pneumatic motor (J) by the reheated second fluid, so that the second fluid is repeatedly heated and cooled; and
transferring the cooled first fluid to condense output pressure working medium gas of the pneumatic motor (J), and again absorbing heat from and thus cooling the first fluid, which is raised in temperature due to condensing the output pressure working medium gas of the pneumatic motor (J), by the working medium of the heat pump (I), in order for the again cooled first fluid to again condense the output pressure working medium gas of the pneumatic motor (J), so that the first fluid is repeatedly cooled and heated.

19. The method of claim 18, wherein,
the absorbing heat from a first fluid circulating in a first circulating loop by using a working medium of a heat pump (I) so that the first fluid is cooled, comprises: absorbing heat from and thus cooling the first fluid from a first fluid storage tank (G) by the working medium of the heat pump (I), and transferring the cooled first fluid to a second fluid storage tank (E);
the compressing the working medium with the absorbed heat by the heat pump (I) to further raise temperature of the working medium, and heating a second fluid circulating in a second circulating loop by the working medium, comprises: compressing the working medium with the absorbed heat by the heat pump (I) to further increase the temperature of the working medium to heat the second fluid from a third fluid storage tank (H), and transferring the heated second fluid to a fourth fluid storage tank (F);
the transferring the heated second fluid to heat and vaporize an input pressure working medium of a pneumatic motor (J) into pressure working medium gas for actuating the pneumatic motor (J), comprises: transferring the heated second fluid from the fourth fluid storage tank (F) to heat and vaporize the input pressure working medium of the pneumatic motor (J) into the pressure working medium gas for actuating the pneumatic motor (J), and transferring the second fluid after heating the input pressure working medium back to the third fluid storage tank (H); and
the transferring the cooled first fluid to condense output pressure working medium gas of the pneumatic motor (J), comprises: transferring the cooled first fluid from the second fluid storage tank (E) to condense the output pressure working medium gas of the pneumatic motor (J), and returning the first fluid after the condensation to the first fluid storage tank (G).

20. The method of claim 19, wherein,
the transferring the cooled first fluid from the second fluid storage tank (E) to condense the output pressure working medium gas of the pneumatic motor (J), comprises: transferring the cooled first fluid from the second fluid storage tank (E) through a first condenser (C) to condense the output pressure working medium gas of the pneumatic motor (J) that flows into the first condenser (C), thereby obtaining pressure working medium liquid which is returned to a vapor generator (D) as the input pressure working medium of the pneumatic motor (J); and
the heated second fluid from the fourth fluid storage tank (F) is used to, when flowing through the vapor generator (D), heat and vaporize the input pressure working medium of the pneumatic motor (J) in the vapor generator (D) as the pressure working medium gas for actuating the pneumatic motor (J).

21. The method of claim 19 or 20, wherein,
the absorbing heat from and thus cooling the first fluid from a first fluid storage tank (G) by the working medium of the heat pump (I) comprises: causing the working medium of the heat pump (I) to flow through the evaporator (A) and absorb heat from the first fluid flowing into the evaporator (A) from the first fluid storage tank (G), so that the working medium of the heat pump (I) is vaporized and the first fluid is cooled;
wherein the compressed working medium of the heat pump (I) flows into a second condenser (B) to heat the second fluid flowing into the second condenser (B) from the third fluid storage tank (H), so that the working medium of the heat pump (I) condenses and then transferred back to the evaporator (A).

22. The method of claim 20 or 21, before the pressure working medium liquid obtained from the condensing is transferred back to the vapor generator (D) as the input pressure working medium of the pneumatic motor (J), the method further comprises:
fluidly connecting the first condenser (C) to a working medium liquid storage tank (14) while maintaining the working medium liquid storage tank (14) being fluidly disconnected from the vapor generator (D), to allow the pressure working medium liquid obtained from the condensing to flow into the working medium liquid storage tank (14), and
when a liquid level inside the working medium liquid storage tank (14) is higher than a predefined first threshold, fluidly disconnecting the working medium liquid storage tank (14) from the first condenser (C) and fluidly connecting the working medium liquid storage tank (14) to the vapor generator (D), to enable the pressure working medium liquid in the working medium liquid storage tank (14) to return to the vapor generator (D).

23. The method of claim 22, further comprising:
when the liquid level inside the working medium liquid storage tank (14) is lower than a predefined second threshold, fluidly disconnecting the working medium liquid storage tank (14) from the vapor generator (D) and fluidly connecting the working medium liquid storage tank (14) to the first condenser (C) to allow the pressure working medium liquid obtained from the condensing to flow into the working medium liquid storage tank (14), wherein the predefined second threshold is below the predefined first threshold.

24. The method of claim 23, further comprising: when the working medium liquid storage tank (14) is fluidly reconnected to the first condenser (C), driving a pneumatic power generator (11) for electricity generation by a pressure difference between the inside of the working medium liquid storage tank (14) and the inside of the first condenser (C), wherein the generated electricity is preferably used to assist in heating the second fluid in the fourth fluid storage tank (F).

25. The method of any one of claims 19-24, wherein,
the heat pump (I) includes an electrical motor and a compressor driven by the motor, and the method further comprises water-cooling the motor by at least a part of the second fluid from the third fluid storage tank (H) and transferring the at least a part of the second fluid after the water-cooling to the fourth fluid storage tank (F),
and/or,
the pneumatic motor (J) is connected to and drives a power generator, and the method further comprises water-cooling the power generator by at least a part of the second fluid from the third fluid storage tank (H) and transferring the at least a part of the second fluid after the water-cooling to the fourth fluid storage tank (F).

26. The method of any one of claims 19 to 25, wherein the first, second, third and fourth fluid storage tanks (G, E, H, F), the working medium liquid storage tank (14), the evaporator (A), the vapor generator (D), the first condenser (C) and/or the second condenser (B) are thermally insulated.

27. The method of any one of claims 18 to 26, wherein,
the first fluid is salt water, and the first fluid that is heated by condensing the output pressure working medium gas of the pneumatic motor (J) is of a temperature preferably between 0°C and 20°C, more preferably between 0°C and 12°C, or more preferably of 12°C; and the first fluid that is cooled by dissipating heat to the working medium of the heat pump (I) is of a temperature preferably between -20°C and 0°C, more preferably between -12°C and 0°C, or more preferably of -12°C; and/or,
the second fluid is fresh water, and the second fluid that is cooled by heating the input pressure working medium is of a temperature preferably between 30°C and 50°C, more preferably between 35°C and 45°C, or more preferably of 40°C; and the second fluid that is heated by the working medium of the heat pump (I) is of a temperature preferably between 90°C and 60°C, more preferably between 80°C and 65°C, or more preferably of 75°C; and/or,
the working medium of the heat pump (I) is CO₂ and the pressure working medium of the pneumatic motor (J) is ammonia.

28. A distributed energy transforming system, comprising a heat pump (I), a pneumatic motor (J), a first circulating loop through which a first fluid circulates, and a second circulating loop through which a second fluid circulates, wherein,
the heat pump (I) is configured to absorb heat, using its working medium, from the first fluid so that the first fluid is cooled, and compress the working medium with the absorbed heat to further increase a temperature of the working medium, in order for heating the second fluid by the working medium;
the heated second fluid is used to heat and vaporize an input pressure working medium of the pneumatic motor (J) into pressure working medium gas for actuating the pneumatic motor (J), and the second fluid, which is decreased in temperature because of heating the input pressure working medium, is reheated by the working medium of the heat pump (I) in order for reheating the input pressure working medium of the pneumatic motor (J), so that the second fluid is repeatedly heated and cooled; and
the cooled first fluid is used to condense output pressure working medium gas of the pneumatic motor (J), and the working medium of the heat pump (I) is used to again absorb heat from and hence cool the first fluid which is raised in temperature due to condensing the output pressure working medium gas of the pneumatic motor (J), in order for the again cooled first fluid to again condense the output pressure working medium gas of the pneumatic motor (J), so that the first fluid is repeatedly cooled and heated.

29. The system of claim 28, further comprising a first fluid storage tank (G), a second fluid storage tank (E), a third fluid storage tank (H), and a fourth fluid storage tank (F), wherein the first and second fluid storage tank (G, E) are disposed along the first circulating loop and configured to store the first fluid, and the third and fourth fluid storage tanks (H, F) are disposed along the second circulating loop and configured to store the second fluid, and wherein,
the first fluid storage tank (G) is configured to store the first fluid which is heated by condensing output pressure working medium gas of the pneumatic motor (J), wherein the heat pump (I) is further configured to absorb heat from and thus cool, by its working medium, the first fluid from the first fluid storage tank (G), and the second fluid storage tank (E) is configured to store the cooled first fluid; and
the third fluid storage tank (H) is configured to store the second fluid which is cooled by heating the input pressure working medium of the pneumatic motor (J), wherein the heat pump (I) is further configured to heat, by its working medium, the second fluid from the third fluid storage tank (H), and the fourth fluid storage tank (F) is configured to store the heated second fluid.

30. The system of claim 29, further comprising a first condenser (C) and a vapor generator (D), wherein,
the first condenser (C) is configured to enable the cooled first fluid flowing therethrough from the second fluid storage tank (E) to condense the output pressure working medium gas of the pneumatic motor (J) that flows into the first condenser (C), thereby obtaining pressure working medium liquid which is returned to the vapor generator (D) as the input pressure working medium of the pneumatic motor (J); and
the vapor generator (D) is configured to enable the heated second fluid flowing therethrough from the fourth fluid storage tank (F) to heat and vaporize the input pressure working medium of the pneumatic motor (J) in the vapor generator (D) as the pressure working medium gas for actuating the pneumatic motor (J).

31. The system of claim 29 or 30, further comprising an evaporator (A) and a second condenser (B), wherein,
the evaporator (A) is configured to enable the working medium of the heat pump (I) flowing therethrough to absorb heat from the first fluid flowing into the evaporator (A) from the first fluid storage tank (G), so that the working medium of the heat pump (I) is vaporized and the first fluid is cooled; and
the second condenser (B) is configured to enable the compressed working medium of the heat pump (I) flowing therethrough to heat the second fluid flowing into the second condenser (B) from the third fluid storage tank (H), so that the working medium of the heat pump (I) condenses and then transferred back to the evaporator (A).

32. The system of claim 30 or 31, further comprising a working medium liquid storage tank (14), which is positioned at a lower position than the first condenser (C), fluidly connected to the first condenser (C) via a first valve (13), and fluidly connected to the vapor generator (D) via a second valve (18),
wherein when the first valve (13) is open, the second valve (18) is closed so that the first condenser (C) is in communication with the working medium liquid storage tank 14, which is meanwhile fluidly disconnected from the vapor generator (D), to enable the pressure working medium liquid obtained from the condensation to flow into the working medium liquid storage tank (14), and
when the liquid level in the working medium liquid storage tank (14) is higher than a predefined first threshold, the first valve (13) is changed to be closed and the second valve (18) is changed to be open, so that the working medium liquid storage tank (14) is fluidly disconnected from the first condenser (C) but is in communication with the vapor generator (D), to enable the pressure working medium liquid collected in the working medium liquid storage tank (14) to return to the vapor generator (D).

33. The system of claim 32, wherein,
when the liquid level inside the working medium liquid storage tank (14) is lower than a predefined second threshold, the first valve (13) is changed to be open and the second valve (18) is changed to be closed, so that the working medium liquid storage tank (14) is fluidly disconnected from the vapor generator (D) but fluidly reconnected with the condenser (C), to enable the pressure working medium liquid obtained from the condensation to flow into the working medium liquid storage tank (14), wherein the predefined second threshold is below the predefined first threshold.

34. The system of claim 33, wherein,
the working medium liquid storage tank (14) is further fluidly connected to the first condenser (C) via a third pipeline different from a first pipeline where the first valve (13) is located, and a third valve (12) and a pneumatic power generator (11) which are serially connected are arranged along the third pipeline,
the working medium liquid storage tank (14) is further fluidly connected to the vapor generator (D) via a fourth pipeline different from a second pipeline where the second valve (18) is located, and a fourth valve (16) and a gas storage tank (17) which are serially connected are arranged along the fourth pipeline, where the gas storage tank (17) is connected between the vapor generator (D) and the fourth valve (16) and configured to store the pressure working medium gas resulting from the vaporization,
when the liquid level in the working medium liquid storage tank (14) is higher than the predefined first threshold, the third valve (12) is changed from the open state to the closed state and the fourth valve (16) is changed from the closed state to the open state; and when the liquid level in the working medium liquid storage tank (14) is lower than the predefined second threshold, the third valve (12) is changed from the closed state to the open state and the fourth valve (16) is changed from the open state to the closed state, so that a pressure difference between the inside of the working medium liquid storage tank (14) and the inside of the first condenser (C) drives the pneumatic power generator (11) for electricity generation, wherein the generated electricity is preferably used to assist in heating the second fluid in the fourth fluid storage tank (F), and when the pressure inside the working medium liquid storage tank (14) balances with the pressure inside the first condenser (C), the first valve (13) is changed from the closed state to the open state.

35. The system of claim 34, wherein the first valve (13) and the second valve (18) are check valves, and the third valve (12) and the fourth valve (16) are electric valves.

36. The system of any one of claims 29-35, wherein,
the heat pump (I) includes an electrical motor and a compressor driven by the motor, at least a part of the second fluid from the third fluid storage tank (H) is used to water-cool the motor and then is returned to the fourth fluid storage tank (F),
and/or,
the pneumatic motor (J) is connected to and drives a power generator, and at least a part of the second fluid from the third fluid storage tank (H) is used to water-cool the power generator and then is returned to the fourth fluid storage tank (F).

37. The system of any one of claims 29 to 36, wherein the first, second, third and fourth fluid storage tanks (G, E, H, F), the working medium liquid storage tank (14), the evaporator (A), the vapor generator (D), the first condenser (C) and/or the second condenser (B) are thermally insulated.

38. The system of any one of claims 28 to 37, wherein,
the first fluid is salt water, and the first fluid that is heated by condensing the output pressure working medium gas of the pneumatic motor (J) is of a temperature preferably between 0°C and 20°C, more preferably between 0°C and 12°C, or more preferably of 12°C; and the first fluid that is cooled by dissipating heat to the working medium of the heat pump (I) is of a temperature preferably between -20°C and 0°C, more preferably between -12°C and 0°C, or more preferably of -12°C; and/or,
the second fluid is fresh water, and the second fluid that is cooled by heating the input pressure working medium is of a temperature preferably between 30°C and 50°C, more preferably between 35°C and 45°C, or more preferably of 40°C; and the second fluid that is heated by the working medium of the heat pump (I) is of a temperature preferably between 90°C and 60°C, more preferably between 80°C and 65°C, or more preferably of 75°C; and/or,
the working medium of the heat pump (I) is CO₂ and the pressure working medium of the pneumatic motor (J) is ammonia.
